# EUROPÄISCHE PATENTSCHRIFT

(11) **EP 0 539 393 B1**
(45) Veröffentlichungstag und Bekanntmachung des Hinweises auf die Patenterteilung: **14.12.1994**
(21) Anmeldenummer: 91911744.0
(22) Anmeldetag: 08.07.1991
(51) Int. Cl.: G01P 9/04, G01P 15/08

(54) **MIKROMECHANISCHER DREHRATENSENSOR**
MICRO-MECHANICAL ROTATIONAL-SPEED SENSOR
DETECTEUR DE VITESSE DE ROTATION MICROMECANIQUE

(30) Priorität: 14.07.1990 DE 4022495
(43) Veröffentlichungstag der Anmeldung: 05.05.1993
(73) Patentinhaber: ROBERT BOSCH GMBH, 70442 Stuttgart (DE)
(72) Erfinder: SEIPLER, Dieter, D-7410 Reutlingen (DE); ROTHLEY, Manfred, D-7521 Kraichtal (DE); ZABLER, Erich, D-7513 Stutensee (DE); PFAFF, Georg, D-7145 Markgröningen (DE); ERHARDT, Rainer, D-7000 Stuttgart 80 (DE); MAREK, Jiri, D-7410 Reutlingen 22 (DE); WOLF, Jörg, D-7500 Karlsruhe (DE); BANTIEN, Frank, D-7257 Ditzingen (DE)
(86) Internationale Anmeldenummer: DE9100555
(87) Internationale Veröffentlichungsnummer: WO9201941

(56) Entgegenhaltungen:
- EP-A- 0 198 724
- EP-A- 0 309 782
- WO-A-89/05459
- FR-A- 2 602 055
- US-A- 4 750 364
- US-A- 4 836 023
- Journal of Physics E./Scientific Instruments, vol. 21, no. 12, December 1988, Bristol, GB, pages 1114-1128; Greenwood: "Silicon in mechanical sensors"
- IEEE Transactions on Instrumentation and Measurement, vol. 37, no. 4, December 1988, New York, US, pages 569-571; Wilner: "A high performance, variable capacitance accelerometer"
- Sensors & Actuators, vol. 17, no. 1, 2, 3, May 1989, Lausanne, CH, pages 241-245; Satchell & Greenwood: "A thermally-excited silicon accelerometer"

## Beschreibung

### Stand der Technik

Die Erfindung geht aus von einem Drehratensensor nach der Gattung der unabhängigen Ansprüche.

Es ist bereits bekannt, z. B. zur Messung der Drehgeschwindigkeit eines Fahrzeugs im wesentlichen um die Hochachse, zur Regelung der Fahrdynamik oder auch zu Navigationszwecken, geringe Drehraten von einer Umdrehung im Bereich von mehreren Grad pro Sekunde mit Sensoren zu erfassen, bei denen eine Stimmgabelstruktur, die parallel zur Drehachse orientiert ist, zu Schwingungen in einer Ebene angeregt wird. Bei einer Drehung um die Drehachse wirkt die Corioliskraft auf die schwingenden Stimmgabelzinken senkrecht zur Drehachse und senkrecht zur Anregungsrichtung, d. h. zur Auslenkung der Zinken bei Abwesenheit einer Drehbewegung. Die Drehrate kann über die von der Corioliskraft verursachte Auslenkung der Zinken senkrecht zur Anregungsrichtung erfaßt und ausgewertet werden.

In der US-PS 4 836 023 wird ein Drehratensensor mit Schwingern und mit Mitteln zur Aufhängung der Schwinger an einem Rahmen beschrieben, der nach dem eingangs erläuterten Prinzip arbeitet. Die Schwinger sind quaderförmig ausgestaltet und mittels vier Aufhängungen am Rahmen befestigt. Die Schwinger, die Aufhängungen und der Rahmen sind aus einem einzigen Materialblock von gleichmäßiger Elastizität strukturiert. Sowohl die Schwingungsanregung der Schwinger als auch der Signalabgriff erfolgt piezoelektrisch. Die auf den Schwingern angeordneten piezoelektrischen Elemente sind über leitende Dünnfilmschichten an außenliegende Schaltkreise angeschlossen. Außerdem weist der Sensor eine obere und eine untere Abdeckung auf.

In der DE-PS 34 17 858 wird vorgeschlagen, die Sensorstruktur aus piezoelektrischem Material, z. B. aus Quarz oder synthetischen Kristallen, zu fertigen. Außerdem werden Sensorsysteme mit mehreren Stimmgabelstrukturen beschrieben, bei denen im wesentlichen Stimmgabelstrukturen paarweise rechtwinklig oder parallel zu einem Schaft an diesem befestigt sind, der zwischen zwei festen Rahmenelementen angeordnet ist. Zudem wird vorgeschlagen, das Meßsignal kapazitiv zu erfassen.

In der US-A-4 750 364 wird ein Drehratensensor offenbart, der zwei Schwinger an Stegen aufweist, die aus einem Siliziumkristall herausstrukturiert sind. Die Schwinger sind in einer ersten Richtung schwingungsfähig und werden durch eine Drehung des Sensors in einer zweiten dazu senkrechten Richtung ausgelenkt. Schwinger und Stege sind aus einer Basisplatte aus einkristallinem Silizium herausstrukturiert, an dieser Basisplatte sind zwei Abdeckungen befestigt, auf denen Elektroden angeordnet sind. Diese Elektroden bilden zusammen mit dem Schwinger Plattenkondensatoren.

### Vorteile der Erfindung

Der erfindungsgemäße Sensor mit den Merkmalen der unabhängigen Ansprüche hat den Vorteil, daß alle schwingungsfähigen Strukturelemente aus einkristallinem Silizium gefertigt sind. Die Zuverlässigkeit des Sensors wird dabei vorteilhaft durch die sehr guten mechanischen Eigenschaften von einkristallinem Silizium bestimmt. Ferner werden die elektrischen Eigenschaften des Siliziums vorteilhaft ausgenutzt, in dem die als mechanische Strukturelemente ausgebildeten Schwinger gleichzeitig als eine Elektrodenseite eines Plattenkondensators und die Aufhängungsstege der Schwinger elektrische Zuleitungen für die Elektroden dienen. Vorteilhaft ist auch, daß der Sensor in einem breiten Temperaturbereich einsetzbar ist, da die schwingungsfähigen Strukturen aus einem einheitlichen Material mit einheitlichem Temperaturverhalten gefertigt sind. Durch den Aufbau der Sensorstruktur aus einem monokristallinen Siliziumwafer, der nicht passiviert ist, werden mechanische Verspannungen, die nur schwer kompensiert werden können, ausgeschlossen und störende Anregungsschwingungen in Meßrichtung minimiert. Ein weiterer Vorteil besteht darin, daß sich auch die Auswerteschaltung für die Meßsignale auf dem Sensorsubstrat integrieren läßt. Der erfindungsgemäße Sensor läßt sich mit besonders kleinem Bauvolumen realisieren, und ist deshalb, beispielsweise für Anwendungen im Kraftfahrzeugbereich, besonders vorteilhaft. Er läßt sich zudem mit standardmäßig in der Mikromechanik verwendeten Verfahren, die eine kostengünstige Batchfertigung ermöglichen, herstellen.Auch die Verwendung von mehrschichtigen Siliziumwafern, die zwischen den Schichten Dotierungsübergänge aufweisen, vereinfacht das Fertigungsverfahren. Besonders vorteilhaft sind pn-Übergänge, da sie die Möglichkeit bieten, einzelne Teile der Sensorstruktur elektrisch voneinander zu isolieren. Bei der Verwendung von dreischichtigen Siliziumwafern lassen sich Schwinger realisieren, die vergrößerte seismische Massen aufweisen, wodurch der Meßeffekt vorteilhaft vergrößert wird.

Durch die in den abhängigen Ansprüchen aufgeführten Maßnahmen sind vorteilhafte Weiterbildungen der im den unabhängigen Ansprüchen angegebenen Sensoren möglich. Um einen kapazitiven Abgriff des Meßsignals zu ermöglichen, muß gewährleistet sein, daß zwischen den als bewegliche Elektroden dienenden Schwingern und einer feststehenden Gegenelektrode auch in und nach Überlastsituationen ein Abstand besteht. Dies kann besonders vorteilhaft dadurch erreicht werden, daß entweder die Abdeckung, auf der die feststehende Elektrode aufgebracht ist, eine Kaverne im Bereich der Schwinger aufweist oder aber daß der Schwinger selbst und die Aufhängungsstege in ihrer Dicke reduziert sind, so daß sich ein Hohlraum zwischen der Abdeckung und der Sensorstruktur im Bereich der Schwinger befindet. Beim Auftreten einer Überlastsituation dient die Abdeckung als Auslenkungsbegrenzung für die Schwinger. Um ein "Ankleben" der Schwinger an der feststehenden Elektrode zu vermeiden, ist es besonders vorteilhaft, Abstandshalter auf der feststehenden Elektrode und/oder auf dem Sensorelement aufzubringen. Besonders vorteilhaft ist es, das Sensorelement aus einem Siliziumwafer mit (110)-Kristallorientierung zu fertigen, da sich in diesen Wafern bei anisotropen Naßätzprozessen seitliche ätzbegrenzende Wände senkrecht zur Waferoberfläche ausbilden, die für die Sensorstruktur besonders vorteilhaft sind. Zur Vermeidung von Störsignalen ist es besonders vorteilhaft, bei der Anordnung der Aufhängungsstege bezüglich der Schwinger auf eine symmetrische Massenverteilung zu achten, da das Meßsignal im Verhältnis zu anderen Störsignalen schwach ist und leicht durch diese Störsignale überdeckt werden kann. Die Schwingungsanregung erfolgt besonders vorteilhaft elektromagnetisch oder thermomechanisch, da hierfür keine Maßnahmen notwendig sind, die die mechanischen Eigenschaften der Schwinger beeinflussen, wie z. B. das Aufbringen von weiteren Schichten. Eine besonders einfache Möglichkeit der elektromagnetischen Anregung eines parallel ausgerichteten Schwingerpaares besteht darin, die beiden Schwinger durch geeignete Maßnahmen elektrisch hintereinander zu schalten, so daß sie gegenläufig von Strom durchflossen werden, und senkrecht zur Stromrichtung ein Magnetfeld anzulegen. Eine besonders einfache Möglichkeit der thermomechanischen Anregung besteht darin, an die Aufhängungsstege Stromimpulse anzulegen, die eine Längenänderung der Stege bewirken. Um die Auslenkungsrichtung der Schwinger bei thermomechanischer Anregung festzulegen, werden die Aufhängungsstege vorteilhaft unter einem geringen Fehlwinkel parallel zueinander und senkrecht zur Detektionsrichtung orientiert. Vorteilhaft lassen sich die Schwinger auch elektrostatisch anregen, indem zwischen den Schwingern oder den Aufhängungsstegen und entsprechenden Gegenelektroden im Rahmen ein elektrisches Feld angelegt wird. Ferner können die Schwinger auch vorteilhaft durch einen Reluktanzantrieb betrieben werden, indem beispielsweise die Aufhängungsstege der Schwinger kammförmige Strukturen aufweisen, die in kammförmige Strukturen von festen Gegenelektroden hineinragen, wobei zwischen den ineinandergreifenden kammförmigen Strukturen ein elektrisches Feld angelegt wird. Vorteilhaft ist auch, daß sich unter Verwendung einer oberen und einer unteren Abdeckung des Sensorelements, die beide mit feststehenden Elektroden versehen sind, einfach Differentialanordnungen zum kapazitiven Signalabgriff realisieren lassen. Zur Erhöhung des Meßeffektes oder auch zur Trennung der Schwingungsanregung und des Signalabgriffes ist es vorteilhaft, Strukturen mit doppelter oder vierfacher Stimmgabelstruktur zu verwenden. Dies kann beispielsweise vorteilhaft mittels eines gitterförmigen Rahmens, von dessen Streben zweiseitig paarweise Schwinger ausgehen, die zusammen mit der Strebe mehrfach Stimmgabelstrukturen bilden, realisiert werden.

In den Verfahrensansprüchen werden ferner vorteilhafte Verfahren zur Herstellung von erfindungsgemäßen Drehratensensoren beschrieben. Dabei werden ausschließlich in der Mikromechanik übliche Prozeßschritte durchgeführt. Besonders vorteilhaft ist in diesem Zusammenhang, die unterschiedlichen Möglichkeiten für Dotierungsübergänge nicht nur im Zuge des Verfahrens zu berücksichtigen, sondern auch um definierte elektrische Verhältnisse zu schaffen, so daß beispielsweise in mehreren Schichten ausgebildete Schwinger eine bezüglich der Ladungsträgerart einheitliche Dotierung aufweisen.

### Zeichnung

Ausführungsbeispiele der Erfindung sind in der Zeichnung dargestellt und in der nachfölgenden Beschreibung näher erläutert. Es zeigen Figur 1 die Aufsicht auf ein Sensorelement, Figur 2 den Schnitt durch dieses Sensorelement entlang der II-II-Achse, Figur 3 den Schnitt durch dieses Sensorelement entlang der III-III-Achse, Figur 4 die Aufsicht auf ein weiteres Sensorelement, Figur 5 den Schnitt durch einen Sensor, Figur 6 den Schnitt durch einen weiteren Sensor, Figur 7 das Schema des thermomechanischen Antriebs, Figur 8 die Aufsicht auf ein Sensorelement mit thermomechanischem Antrieb, Figur 9 und 10 Schwinger mit elektrostatischem Antrieb, Figur 11 die Aufsicht auf ein Sensorelement mit elektrostatischem Antrieb, Figur 12 den Schnitt durch dieses Sensorelement entlang der XII-XII-Achse, Figur 13 die Aufsicht auf einen Schwinger mit Reluktanzantrieb, Figur 14 eine Mehrfachstimmgabelstruktur, die Figuren 15a bis f ein Verfahren zur Herstellung eines Sensorelements aus einem zweischichtigen Siliziumwafer, Figuren 16a bis f ein Verfahren zur Herstellung eines Sensorelements aus einem dreischichtigen Siliziumwafer und die Figuren 17a bis g ein weiteres Verfahren zur Herstellung eines Sensorelements aus einem dreischichtigen Wafer.

### Beschreibung der Erfindung

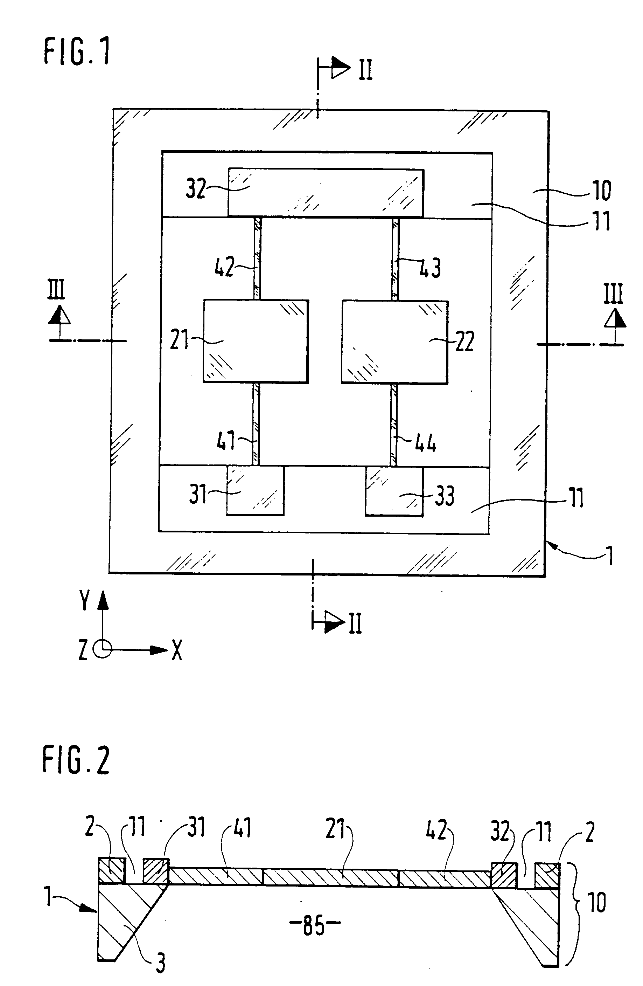

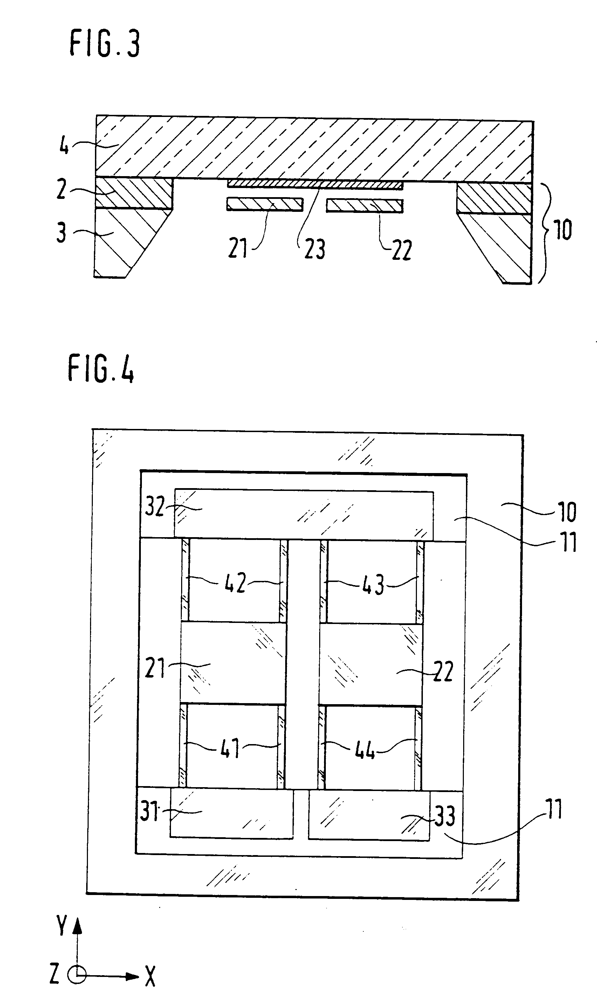

In Figur 1 ist die Topographie eines Sensorelements 1 dargstellt. Es weist einen Rahmen 10 auf und zwei Schwinger 21, 22, die über Stege 41 bis 44 zweiseitig mit dem Rahmen verbunden sind. Die Schwinger 21, 22 haben bezüglich ihrer Aufhängung eine symmetrische Massenverteilung. Außerdem sind die Schwinger 21, 22 parallel zueinander aufgehängt. Im Rahmen 10 befinden sich an den Seiten, an denen die Aufhängungsstege 41 - 44 mit dem Rahmen 10 verbunden sind, Ätzgräben 11. In den Ätzgräben 11 sind elektrische Anschlüsse 31, 32 und 33 für die Aufhängungen angeordnet. Figur 2 zeigt einen Schnitt durch die II-II-Achse des in Figur 1 dargestellten Sensorelements 1. Es ist aus einem zweischichtigen Siliziumwafer aufgebaut, besteht allerdings nur noch in Bereichen des Rahmens 10 aus einem Substrat 3 und einer darauf aufgebrachten weiteren Schicht 2. Zwischen der weiteren Schicht 2, die meist durch einen Epitaxieprozeß erzeugt ist, aber auch durch Diffusion von Fremdatomen in das Substrat 3 erzeugt werden kann, und dem Substrat 3 besteht ein Dotierungsübergang, in diesem Beispiel ein pn-Übergang. Dabei kann es sich aber auch um einen Übergang zwischen einer p⁺-dotierten Schicht und einem n-dotierten Substrat handeln. Im Bereich der Stege 41, 42 und des Schwingers 21 befindet sich eine Rückseitenätzung 85, so daß die Stege 41, 42 und der Schwinger 21 ausschließlich in der weiteren Schicht 2 ausgebildet sind. Der Ätzgraben 11 im Rahmen 10 durchdringt die weitere Schicht 2 vollständig so daß die Stege 41, 42 und der Schwinger 21 vom Rest des Sensorelements 1 elektrisch isoliert sind. In den Ätzgräben 11 befinden sich elektrische Anschlüsse 31 und 32 für den Schwinger 21, wobei die leitende Verbindung zwischen den Anschlüssen 31, 32 und dem Schwinger durch die Aufhängungsstege 41, 42 hergestellt ist. Die Anschlüsse 31, 32 und 33 sind mit dem Substrat mechanisch verbunden, jedoch durch den pn-Übergang zwischen dem Substrat 3 und der weiteren Schicht 2 und dem Graben 11 elektrisch voneinander isoliert. Auf diese Weise kann auf Passivierschichten und Leiterbahnen vollständig verzichtet werden, so daß dadurch auftretende mechanische Verspannungen der beweglichen Strukturen vermieden werden. Die Aufhängungsstege 41, 42 und der Schwinger 21 sind von der Waferoberseite ausgehend in ihrer Dicke reduziert, d. h., sie sind ausschließlich in der weiteren Schicht 2 ausgebildet, haben aber nicht die gesamte Dicke der weiteren Schicht 2. Diese Maßnahme soll eine Schwingungsfähigkeit der Schwinger 21, 22 auch bei Anwesenheit einer oberen Abdeckung 4, wie sie in Figur 3 dargestellt ist, gewährleisten. Dies kann allerdings auch dadurch erreicht werden, daß in die obere Abdeckung 4 eine Kaverne im Bereich der Stege 41 bis 44 und der Schwinger 21, 22 eingebracht wird. Gegenüber den als eine Seite eines Plattenkondensators dienenden Schwingern 21, 22 ist auf der Abdeckung 4 eine feststehende Elektrode 23 aufgebracht, so daß sich Auslenkungen der Schwinger 21, 22 in dieser Richtung als Kapazitätsänderungen erfassen lassen. Die feststehende Elektrode 23 kann in Form einer Metallisierung auf der Abdeckung 4 realisiert sein. Diese Anordnung der Elektroden 21 bis 23 stellt eine Differentialanordnung der, wenn man berücksichtigt, daß die Elektroden 21, 22 bei einer Drehbewegung im entgegengesetzten Richtungen ausgelenkt werden. Die Verbindung zwischen dem mikromechanisch strukturierten Wafer und den Abdeckungen 4, für die vorzugsweise Glasträger verwendet werden, kann beispielsweise durch anodisches Bonden erfolgen. Die elektrischen Anschlüsse der feststehenden Elektrode 23 und der Anschlüsse 31 bis 33 sind geeignet nach außen zu führen. Die in den Figuren 1 bis 3 dargestellte Ausführungsform besitzt Schwinger 21, 22, die an jeweils zwei dünnen Stegen 41 bis 44 wie eine doppelseitig eingespannte Stimmgabel aufgehängt sind. In Erweiterung dieser Struktur ist in Figur 4 eine Ausführungsform dargestellt, bei der jeder Schwinger 21, 22 an insgesamt vier Stegen aufgehängt ist. Dies hat den Vorteil, daß die Schwinger 21 und 22 wesentlich besser gehaltert sind und sich bei einer Schwingungsanregung in X-Richtung nicht eigenständig um ihre Aufhängungsachse verdrehen können. Die Anregung der in den Figuren 1 bis 4 dargestellten Sensorstrukturen kann elektromagnetisch erfolgen. Ein vom Anschluß 31 über den Schwinger 21 zum Anschluß 32 und über den Schwinger 22 zum Anschluß 33 in Y-Richtung fließender Strom erzeugt in einem externen in Z-Richtung orientierten Magnetfeld eine Lorenzkraft, die zu gegensinniger Auslenkung der Elektroden 21 und 22 in X-Richtung führt.

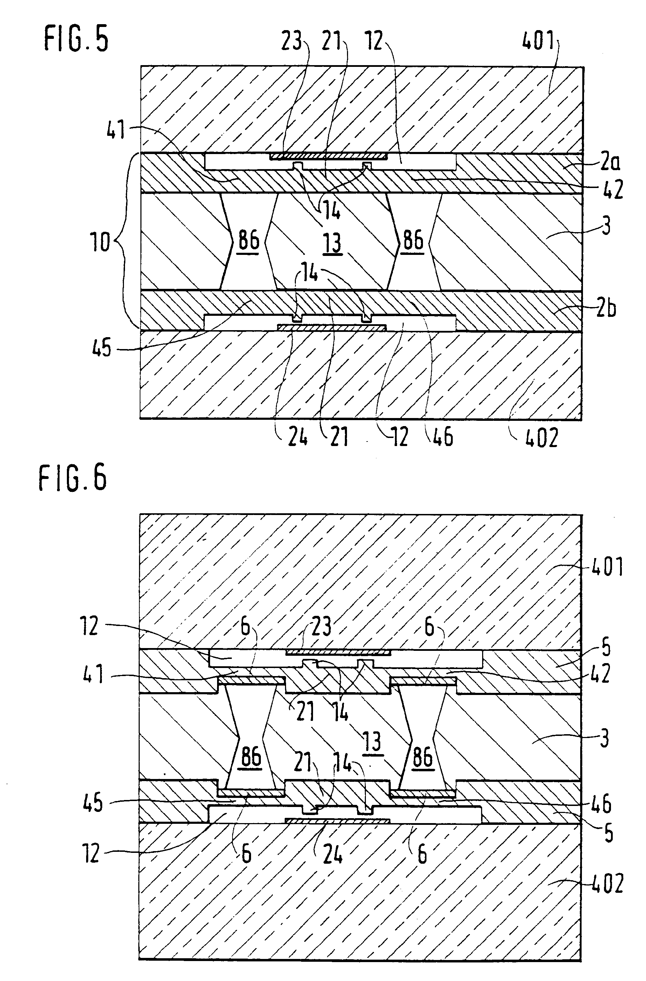

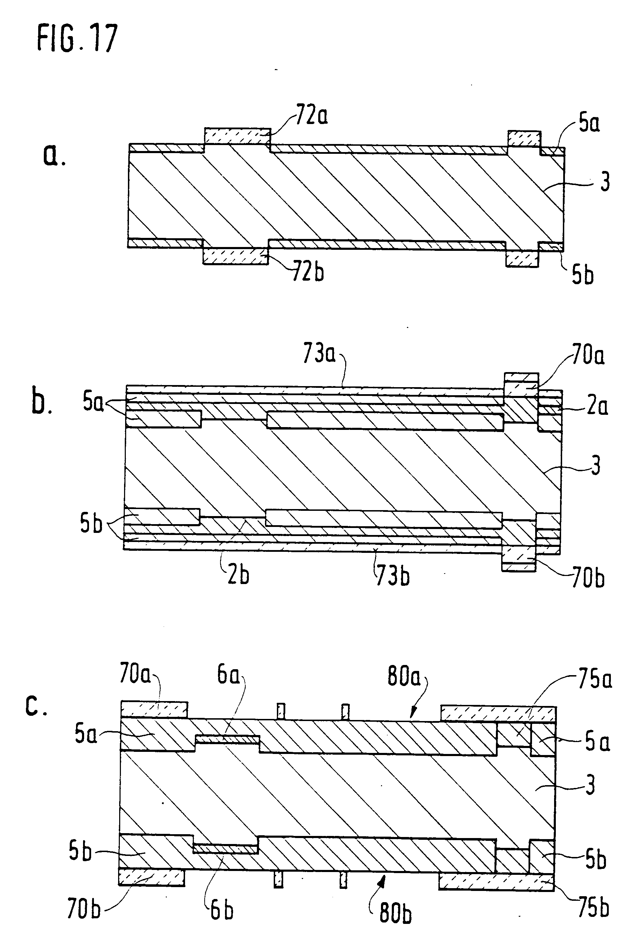

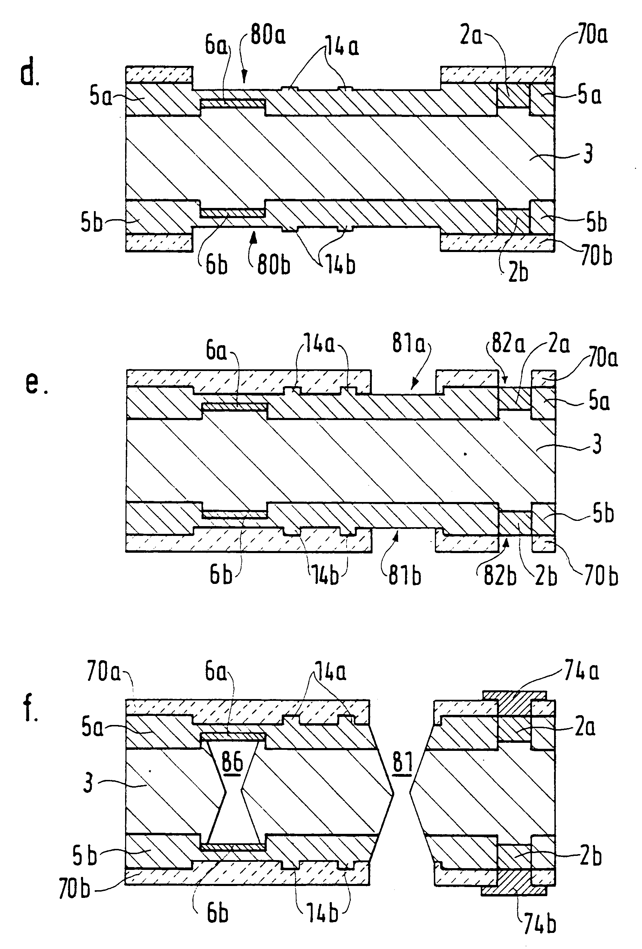

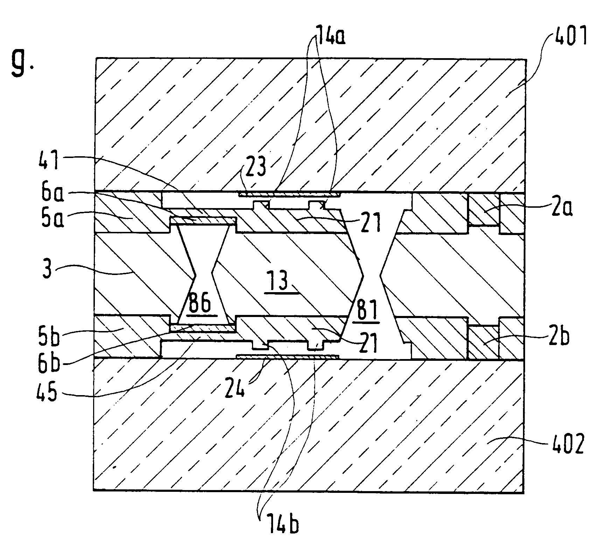

Die in den Figuren 1 bis 4 dargestellten Sensorelemente weisen bewegliche Strukturen auf, die lediglich eine Dicke von wenigen Mikrometern entsprechend der weiteren Schicht 2 besitzen. Dadurch steht auch nur eine geringe Masse zur Verfügung, die durch die Corioliskraft in Z-Richtung beschleunigt werden kann. Die in den Figuren 5 und 6 dargestellten Ausführungsformen beinhalten Sensorelemente, die aus dreischichtigen Siliziumwafern 10 strukturiert sind. Der Siliziumwafer 10 besteht in diesem Fall aus einem Substrat 3 auf das beidseitig weitere Schichten 2a, 2b aufgebracht sind. Zwischen dem Substrat 3 und den beiden weiteren Schichten 2a, 2b bestehen Dotierungsübergänge. Die Schwinger 21, 22 sind jetzt in voller Waferdicke ausgebildet, wobei das Substrat 3 im Bereich der Schwinger 21, 22 als seismische Masse 13 dient. Da die Schwinger 21, 22 möglichst symmetrisch aufgehängt werden sollen, sind die Aufhängungsstege 41 bis 48 in beiden weiteren Schichten 2a und 2b ausgebildet. In den in den Figuren 5 und 6 dargestellten Ausführungsbeispielen sind die Wafer 10 im Bereich der Stege 41 bis 48 und der Schwinger 21, 22 von beiden Waferoberflächen ausgehend in ihrer Dicke reduziert. Auf das Sensorelement sind beidseitig Abdeckungen 401 und 402 aufgebracht. Im Bereich der Stege 41 bis 48 und der Schwinger 21, 22 befinden sich Hohlräume 12, die die Beweglichkeit der Schwinger gewährleisten. Im Bereich der Schwinger 21, 22 sind Elektroden 23, 24 auf die Abdeckungen 401, 402 aufgebracht. Bei großen Auslenkungen der Schwinger 21, 22 in Richtung der Abdeckungen 401, 402 ist es möglich, daß die Schwinger 21, 22 mit den entsprechenden feststehenden Elektroden 23, 24 in Berührung kommen. Um ein Festkleben der Schwinger 21, 22 an einer der Elektroden 23 oder 24 zu verhindern, sind auf der den Elektroden 23, 24 zugewandten Oberflächen der Schwinger 21, 22 Abstandshalter 14 in Form von Erhebungen strukturiert, die nur eine Annäherung der Schwinger 21, 22 an die Elektroden 23, 24 bis zu einem gewissen Abstand ermöglichen. Genauso denkbar wäre es aber, Abstandshalter auf den Abdeckungen 401, 402 anzuordnen. Die Stege 41 bis 48, die nur in den weiteren Schichten 2a, 2b ausgebildet sind, sind durch Unterätzungen 86 freigelegt, so daß das Substrat im Bereich der Stege 41 bis 48 weitgehend vollständig weggeätzt ist. Figur 6 zeigt denselben Sensoraufbau wie Figur 5, nur daß hier das Sensorelement aus einem Wafer 10 strukturiert wurde, der zwar in drei Schichten aufgebaut ist, aber nur pn-Übergänge im Bereich der Stege 41 bis 48 aufweist. Dieses Detail hat hauptsächlich im Zusammenhang mit der Herstellung des Sensorelementes Bedeutung. Es wird bei der Beschreibung der Figuren 17a bis g näher erläutert. Die Topographie der in Figur 5 und 6 im Querschnitt dargestellten Sensorelemente kann wahlweise der in Figur 1 oder der in Figur 4 dargestellten entsprechen.

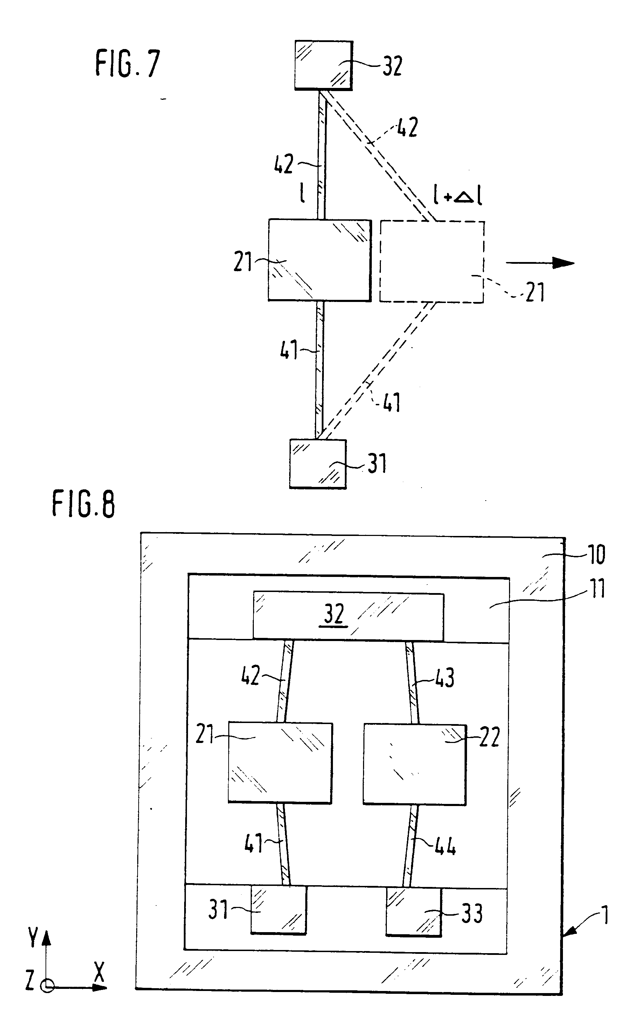

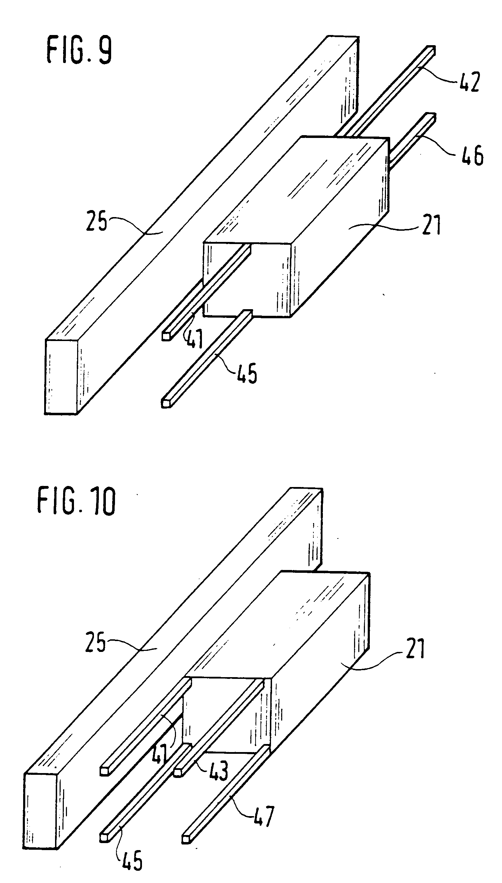

Die Anregung der in den Figuren 1 bis 7 dargestellten Strukturen kann nicht nur elektromagnetisch sondern auch thermomechanisch erfolgen. Der durch die Stege 41 bis 48 fließende Strom heizt diese auf und verursacht dadurch eine Längenausdehnung 1 der Stege 41 bis 48. Dies ist schematisch für einen Schwinger 21 in Figur 7 dargestellt. Bei geeigneter Dimensionierung der Stege 41 bis 48 und entsprechend resonanter Anregung mit Stromimpulsen können die Schwinger 21, 22 in eine bevorzugte Richtung ausgelenkt werden. So ist es vorteilhaft, die dünnen Aufhängungsstege 41 bis 48 nicht senkrecht zur Anregungsrichtung, sondern unter einem geringen Fehlwinkel zu orientieren. Dadurch wird die Richtung der thermomechanisch erzeugten Auslenkung wesentlich besser definiert. In Figur 8 ist eine der in Figur 1 dargestellten Topographie entsprechende Topographie für ein thermomechanisch anregbares Sensorelement 1 dargestellt. Die Schwinger 21 und 22 sind jeweils mit zwei Stegen 41, 42 und 43, 44 mit dem Rahmen 10 verbunden. Jedoch sind die Stege 41, 42 und 43, 44 nicht exakt senkrecht zur Anregungsrichtung, sondern unter einem geringen Fehlwinkel orientiert, so daß sie bei einer Längenänderung der Stege 41 bis 44 durch Erwärmung bevorzugt gegensinnig in X-Richtung schwingen.

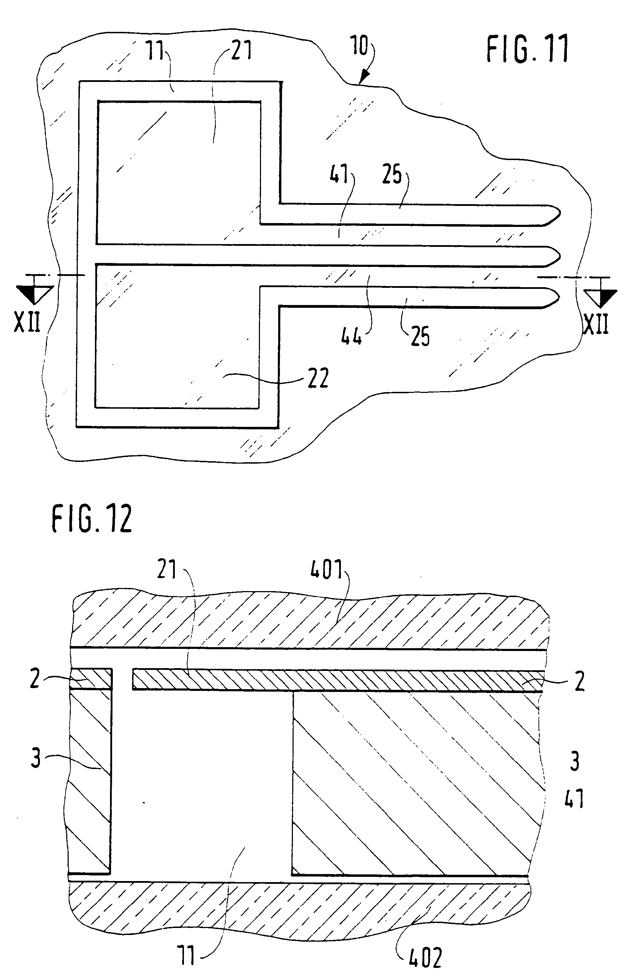

Eine weitere Anregungsvariante ist der elektrostatische Antrieb. Hierbei wird entsprechend der in den Figuren 9 und 10 dargestellten Strukturen den Schwingern 21, 22 feststehende Gegenelektroden 25 in Anregungsrichtung gegenübergestellt. Um eine elektrostatische Anregung möglichst effektiv zu gestalten, muß der Abstand zwischen den als schwingungsfähige Elektroden dienenden Schwingern 21, 22 und den feststehenden Gegenelektroden 25 möglichst gering sein, und die Elektrodenwände müssen parallel zueinander orientiert sein. Deshalb werden derartige Strukturen vorzugsweise aus (110)-orientiertem Silizium strukturiert. Außerdem muß die Elektrodenoberfläche möglichst groß sein, so daß Schwingerstrukturen bevorzugt verwendet werden, die in der gesamten Dicke des Wafers ausgebildet sind. Die Aufhängung kann zweiseitig an vier bzw. acht Stegen 41 - 48 erfolgen (Figur 9); es ist aber auch möglich, die Schwinger einseitig an zwei oder vier Stegen 41, 43, 45, 47 aufzuhängen (Figur 10). Strukturen mit einseitig aufgehängten Schwingern sind sehr flexibel und weisen eine hohe Empfindlichkeit auf. Eine weitere Möglichkeit einer Sensorstruktur mit elektrostatischem Antrieb und einseitiger Aufhängung der Schwinger 21, 22 ist in den Figuren 11 und 12 dargestellt. Sie wird vorzugsweise in zweischichtigen Wafern realisiert. Das Sensorelement weist ein Paar von paddelförmigen Schwingern 21, 22 auf. Die Schwinger 21 und 22 sind über jeweils einen Aufhängungssteg 41 und 44 mit dem Rahmen 10 verbunden, so daß sie in Verbindung mit den Aufhängungsstegen 41, 44 eine Stimmgabelstruktur bilden. Die Stege 41 und 44 sind in voller Waferdicke ausgebildet und dienen jeweils als eine Elektrodenseite eines Anregungskondensators. Gegenüber den Stegen 41, 44 sind feststehende Gegenelektroden 25 als zweite Elektrodenseite der Anregungskodensatoren angeordnet. Die Schwinger 21 und 22 sind paddelförmig nur in der weiteren Schicht 2 ausgebildet, um eine Beweglichkeit senkrecht zur Anregungsrichtung zu ermöglichen.

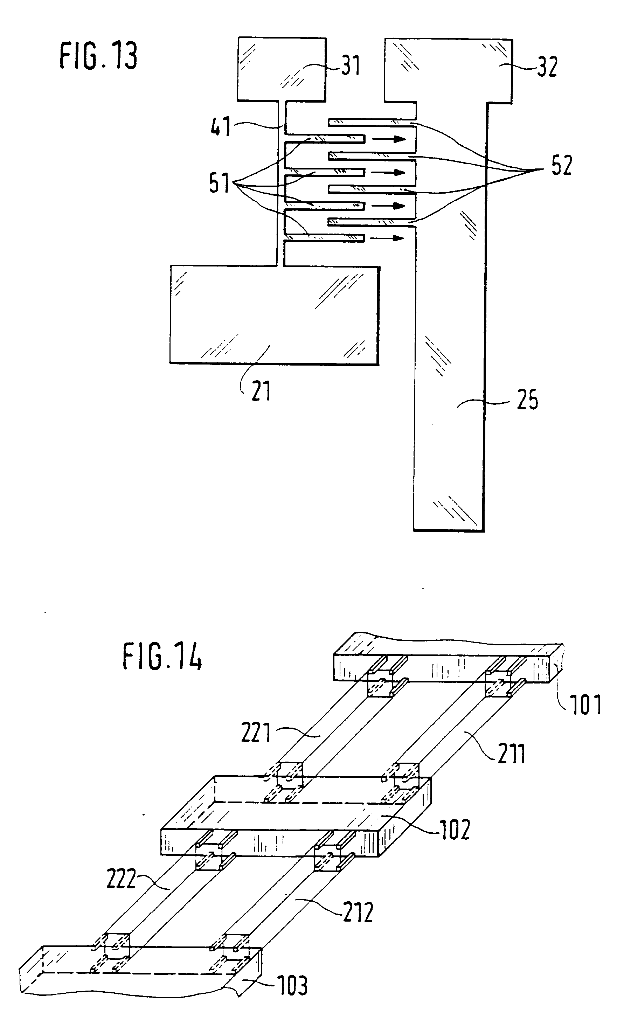

Der elektrostatische Antrieb läßt sich nicht besonders vorteilhaft auf Sensorelemente anwenden, bei denen die Schwinger 21, 22 und die Aufhängungsstege 41 bis 48 ausschließlich in der weiteren Schicht 2 ausgebildet sind, da hier die Fläche der Anregungselektroden entsprechend der geringen Dicke der weiteren Schicht 2 nur sehr gering ist. Diese Strukturen lassen sich allerdings mit Hilfe des Reluktanzantriebs elektrostatisch bewegen. In Figur 13 ist eine feststehende Gegenelektrode 25 dargestellt, die eine kammförmige Struktur mit Fingern 52 in Anregungsrichtung aufweist. Ihr gegenüber ist ein Aufhängungssteg 41, der ebenfalls eine kammförmige Struktur in Anregungsrichtung aufweist angeordnet und zwar so, daß die Finger 51, die von dem Steg 41 ausgehen, in die kammförmige Struktur der feststehenden Elektrode 25 hineingreifen. Bei Anlegen eines elektrischen Feldes an die kammförmigen Elektroden 51, 52 wird der Steg 41 in Anregungsrichtung gezogen und bewegt den daran befestigten Schwinger 21 in diese Richtung.

In Figur 14 ist eine Mehrfachstimmgabelstruktur dargestellt. Der Rahmen 10 besteht aus mehreren Streben 101 bis 103 und kann z. B. gitterförmig ausgestaltet sein. Von einer Strebe 102 des Rahmens 10 gehen zweiseitig, paarweise Schwinger 211, 221 und 212, 222 aus und bilden zusammen mit der Strebe 102 eine Mehrfachstimmgabelstruktur. Die Schwinger 211, 212, 221, 222 können einseitig mit der Strebe 102 verbunden sein oder zweiseitig mit weiteren Streben 101, 103. Mehrfachstimmgabelstrukturen haben den Vorteil, daß an einem Schwinger paar 211, 221 Schwingungen durch verschiedene Antriebsmechanismen angeregt werden können, die sich über die Strebe 102 auf das gegenüberliegende Schwingerpaar 212, 222 übertragen, an dem dann der Signalabgriff erfolgen kann.

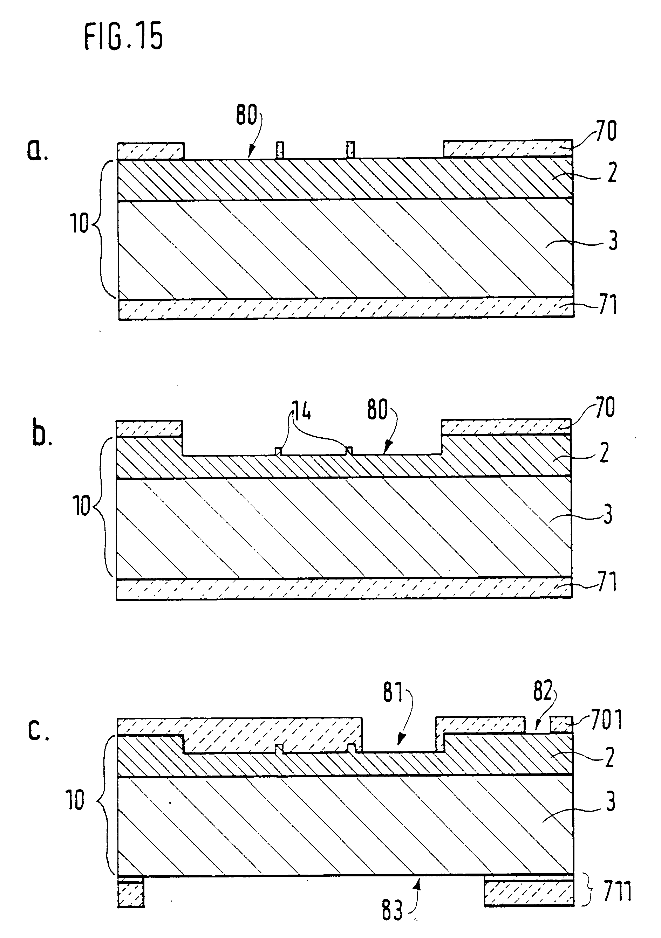

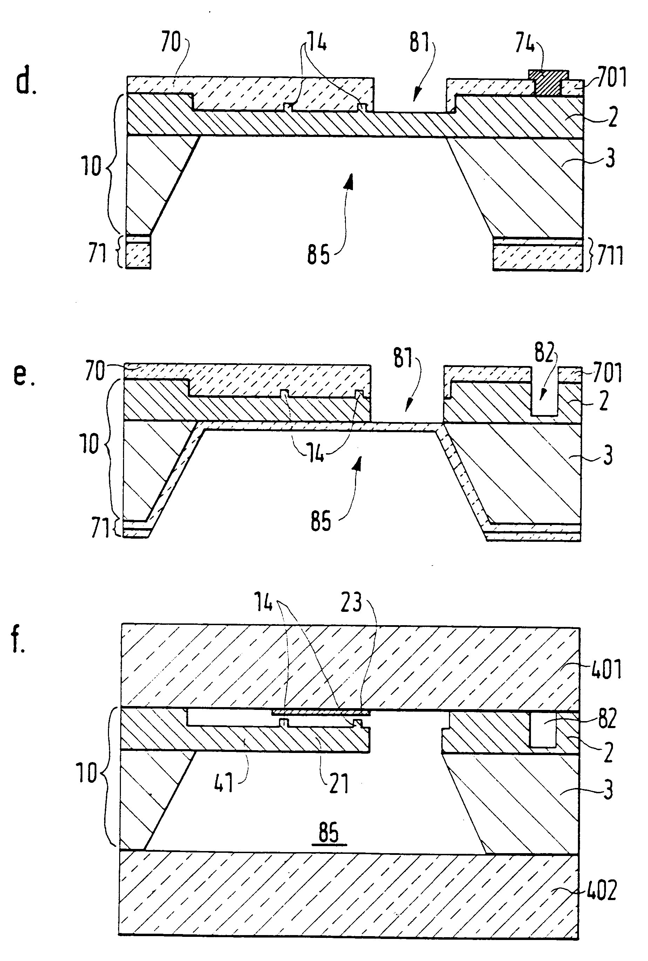

Im folgenden werden Verfahren zur Herstellung der in den Figuren 1 bis 14 dargestellten Sensorstrukturen erläutert. In den Figuren 15a bis f ist der Verfahrensablauf zur Strukturierung eines Sensorelements aus einem zweischichtigen Wafer dargestellt. Ein Siliziumwafer 10 besteht aus einem Substrat 3 und einer weiteren Schicht 2, wobei zwischen dem Substrat 3 und der weiteren Schicht 2 ein Dotierungsübergang besteht. Dies kann, wie in diesem Beispiel, ein pn-Übergang sein oder auch ein pp⁺- oder np⁺-Übergang. Der Wafer 10 wird zunächst beidseitig mit Passivierschichten 70, 71 versehen. Die auf die weitere Schicht 2 aufgebrachte Passivierschicht 70 wird strukturiert, d. h. mit Ausnehmungen 80 in den Bereichen versehen, in denen die Schwinger 21, 22 und die Stege 41 bis 48 in ihrer Dicke reduziert werden sollen. Die Maskierschicht verbleibt jedoch an den Stellen der Schwinger, an denen Abstandshalter 14 strukturiert werden sollen, was in Figur 15a dargestellt ist. Figur 15b zeigt den Wafer 10 nachdem in die Ausnehmungen 80 der Passivierschicht 70 eingeätzt wurde und nach einem zweiten Photoprozeß die Abstandshalter 14 auf eine definierte Höhe geätzt wurden. Nach diesem Verfahrensschritt werden die Passivierschichten 70 und 71 der Vorder- und Rückseite des Wafers 10 entfernt. Vor dem nächsten Prozeßschritt erfolgt eine erneute Passivierung der Rückseite und eine Passivierung der strukturierten Vorderseite des Wafers 10. Die Passivierschicht der Vorderseite 701 wird mit Ausnehmungen 81 an den Stellen versehen, an denen die Schwinger 21, 22 in der weiteren Schicht 2 freigelegt werden sollen. Außerdem werden Ausnehmungen 82 in der Passivierschicht 701 erzeugt, die beispielsweise zum Einbringen von elektrischen Anschlüssen an die weitere Schicht 2 dienen. Auch die Passivierschicht der Rückseite 711 wird mit Ausnehmungen 83 versehen, und zwar in den Bereichen, in denen das Substrat 3 durch Rückseitenätzung entfernt wird, um die Stege 41, 48 und die Schwinger 21, 22 freizulegen, was in Figur 15c dargestellt ist. Da für die Rückseitenätzung, die vorzugsweise naßchemisch anisotrop erfolgt, relativ lange Ätzzeiten erforderlich sind, muß die Rückseite des Wafers 10 mit einer besonders widerstandsfähigen Passivierschicht 711 versehen sein, die sich beispielsweise aus einem abgeschiedenen Oxid und einem darauf abgeschiedenen Nitrid zusammensetzen kann. Figur 15d zeigt den Wafer 10 nach Durchführung der Rückseitenätzung, bei der sich eine Rückseitenausnehmung 85 gebildet hat. Zur Passivierung der weiteren Schicht 2 gegen die Rückseitenätzung wurde an die weitere Schicht 2 über einen Ätzstopanschluß 74 eine Gegenspannung angelegt. Für jeden Wafer ist pro p/n-Übergang nur ein Ätzstopanschluß erforderlich, unabhängig davon wie viele Sensorelemente aus ihm strukturiert werden. Nach der Rückseitenätzung wird die strukturierte Passivierschicht 711 der Rückseite entfernt und auf die strukturierte Rückseite erneut eine Passivierschicht 712 aufgebracht. Nach Entfernen des Ätzstopanschlusses 74 wird die weitere Schicht 2 von der Vorderseite des Wafers 10 ausgehend geätzt. Der Wafer 10 ist in Figur 15e dargestellt, nachdem die Ausnehmungen 81 und 82 der Passivierschicht 711 in die weitere Schicht 2 übertragen worden sind. In Figur 15f ist das fertiggestellte Sensorelement nach Entfernen der Passivierschichten 701 und 712 und nach Kapselung mit einer oberen Abdeckung 401 und einer unteren Abdeckung 402 dargestellt. Die Sensorstruktur weist einen Schwinger 21 auf, der mit einem Aufhängungssteg 41 mit dem Rahmen verbunden ist, wobei Schwinger 21 und Aufhängungssteg 41 in ihrer Dicke reduziert sind und ausschließlich in der weiteren Schicht 2 ausgebildet sind. Zudem weist der Schwinger 21 zwei Abstandshalter 14 auf, die ein Ankleben des Schwingers 21 an die ihm gegenüber auf der Abdeckung 401 angeordneten feststehenden Elektrode 23 verhindern sollen. Die Abdeckungen 401 und 402 bestehen vorzugsweise aus Glas und werden dann vorteilhaft mittels anodischem Bonden mit dem Sensorelement verbunden. Es sei nochmals darauf hingewiesen, daß bei dem hier beschriebenen Verfahren die Abstandshalter 14, die eine Funktionsfähigkeit des Sensors auch nach einer Überlastsituation gewährleistes, aus dem Sensorelement strukturiert werden. Es ist auch möglich, die Schwinger 21, 22 und die Stege 41 bis 48 in der vollen Dicke der weiteren Schicht 2 auszubilden und in der oberen Abdeckung 401 eine Kaverne vorzusehen, die im Bereich der Schwinger 21, 22 eine feststehende Elektrode aufweist und außerdem mit Abstandshaltern 14 im Bereich der Schwinger 21, 22 versehen ist.

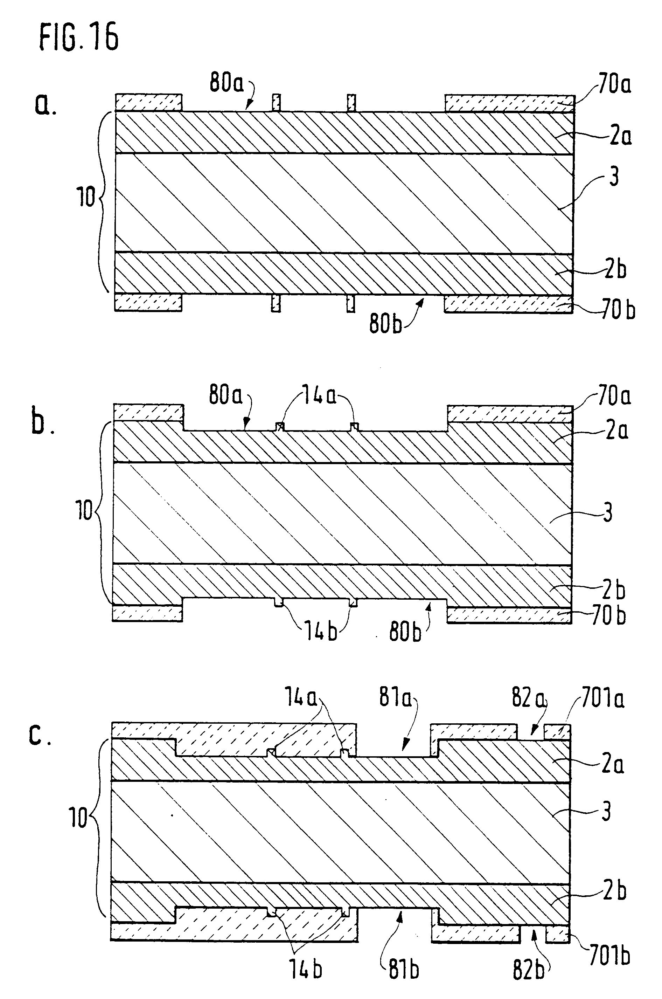

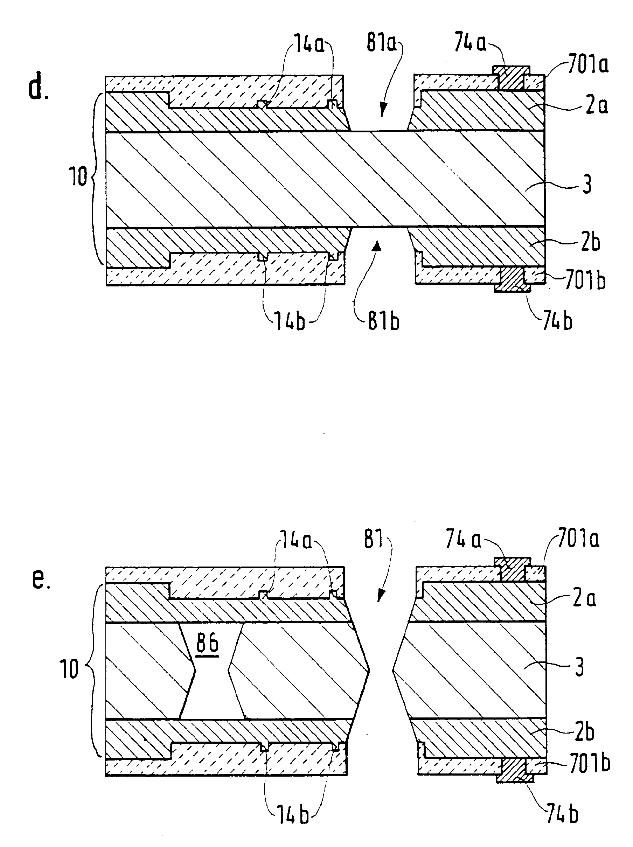

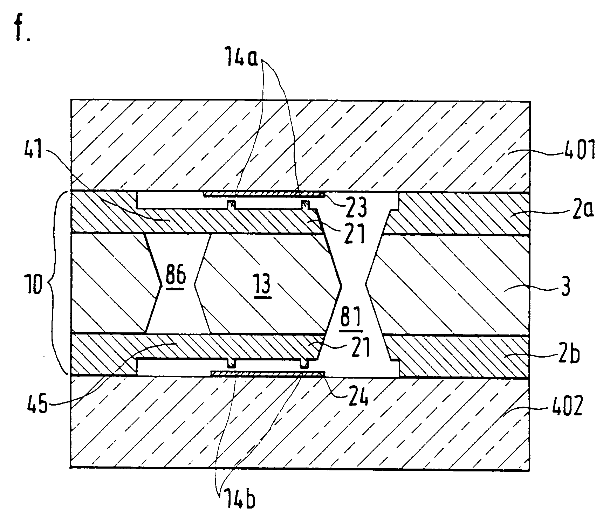

In den Figuren 16a bis e wird ein analoges Verfahren für dreischichtige Wafer 10 beschrieben. Auf ein Substrat 3 sind auf der Vorder- und auf der Rückseite weitere Schichten 2a, 2b abgeschieden. Zwischen den weiteren Schichten 2a und 2b und dem Substrat 3 bestehen Dotierungsübergänge, in diesem Beispiel wieder pn-Übergänge. In den Figuren 16a bis c ist eine den Figuren 15a bis c entsprechende Verfahrensweise für die Oberflächen der weiteren Schichten 2a und 2b dargestellt. Jedoch werden dann zum Freilegen der Schwinger zunächst die Ausnehmungen 81a und 81b in den Passivierschichten 701a und 701b der weiteren Schichten 2a und 2b in die weiteren Schichten 2a und 2b übertragen, wobei die weiteren Schichten 2a und 2b vollständig durchgeätzt werden. Dies erfolgt auch in den Bereichen um die Stege. In der Figur 16d ist der Wafer 10 dargestellt, nachdem die weiteren Schichten 2a und 2b durchgeätzt sind. In einem weiteren Prozeßschritt wird auch an den Stellen, an denen der Wafer vollständig durchgeätzt werden soll, das Substrat zweiseitig ausgehend von den Ausnehmungen 81a, 81b in den weiteren Schichten 2a und 2b eingeätzt bis sich die beiden Ausnehmungen 81a, 81b zu einer Ausnehmung 81 vereinen. Das Freilegen der Stege 41 bis 48 in den weiteren Schichten 2a und 2b erfolgt durch Unterätzung der Stege ausgehend von Öffnungen in den weiteren Schichten 2a und 2b. Dabei werden die Stege durch Anlegen einer Spannung in Sperrichtung an die pn-Übergänge zwischen den weiteren Schichten 2a und 2b und dem Substrat 3 über die Ätzstopanschlüsse 74a und 74b passiviert. In Figur 16f ist das Sensorelement dargestellt nach Entfernen der Passivierschichten 701a und 701b sowie der Ätzstopanschlüsse 74a und 74b und nach Aufbringen einer oberen Abdeckung 401 und einer unteren Abdeckung 402, die jeweils im Bereich des Schwingers 21 eine Gegenelektrode 23, 24 aufweisen. Mittels dieses Ätzverfahrens lassen sich Sensorelemente mit durch eine seismische Masse 13 beschwerten Schwingern 21 herstellen, die nahezu die gesamte Waferdicke haben.

In den Figuren 17a bis g ist ebenfalls ein Verfahren dargestellt, mit dem man Sensorelemente aus dreischichtigen Siliziumwafern fertigen kann. Es entspricht im wesentlichen dem in den Figuren 16a bis f dargstellten Verfahren, allerdings wird in den Figuren 17a bis c ein spezieller Schichtaufbau des Wafers beschrieben. Das Verfahren geht zunächst von einem p-dotierten Substrat 3 aus, das auf seinen Oberflächen mit Lackmasken 72a und 72b versehen wird. Die strukturierten Maskierschichten 72a und 72b verhindern ein Eindringen einer p⁺-Diffusion in die Substratoberflächen an den Stellen, an denen die Aufhängungsstege 41 bis 48 ausgebildet werden sollen und so, daß diese Stellen elektrisch anschließbar sind. Nach dem Einbringen einer p⁺-Dotierung in die maskierten Oberflächen des Substrats 3 und nach Entfernen der Maskierschichten 72a und 72b werden jeweils auf der Oberseite und auf der Rückseite des Substrats 3 n-Epitaxieschichten 2a, 2b abgeschieden. Auf die so präparierten Oberflächen wird mit Ausnahme von einer Anschlußstelle auf der Vorder- und auf der Rückseite, die mit einer Passivierschicht 70a, 70b versehen wird auf beide Oberflächen ein borhaltiges Glas 73a, 73b aufgebracht. Anstelle des borhaltigen Glases können aber auch andere geeignete Materialien, die positive Ionen enthalten, verwendet werden. In einem weiteren Prozeßschritt werden sowohl die p⁺-Dotierungen 5a und 5b als auch die positiven Ionen des borhaltigen Glases 73a und 73b beidseitig in die Epitaxieschichten 2a und 2b eingetrieben. Dies ist in Figur 17b dargestellt. Dadurch entsteht ein dreischichtiger Wafer, der aus einem p-dotierten Substrat 3 und zwei weiteren Schichten 5a und 5b besteht, die mit Ausnahme von vergrabenen n-Gebieten 6a, 6b an den Stellen, an denen die Stege ausgebildet werden sollen und mit n-Gebieten an den Ätzstopanschlußstellen 75a, 75b p-dotiert sind, was in Figur 17c dargestellt ist. Diese vergrabenen n-Gebiete lassen sich sehr wirkungsvoll als Ätzstopgrenzen bei der Unterätzung und Freilegung der Stege 41 bis 48 ausnutzen, was in Figur 17f dargestellt ist. Der Vorteil dieses Verfahrens besteht darin, daß Schwinger hergestellt werden können, die durchgängig mit gleichartigen Ladungsträgern dotiert sind, so daß bei den als Elektroden dienenden Schwingern definierte elektrische Verhältnisse vorliegen.

## Patentansprüche

1. Drehratensensor mit mindestens einer Abdeckung und einem Sensorelement (1), das einen festen Rahmen (10) aufweist, mindestens einen Schwinger (21,22), vorzugsweise mindestens ein Paar von Schwingern (21,22), die mindestens in zwei aufeinander senkrecht stehenden Richtungen schwingungsfähig sind, wobei der mindestens eine Schwinger (21, 22) mit einem oder mehreren Stegen (41 - 48) mit dem Rahmen (10) verbunden ist, wobei die Stege (41 - 48) elektrische Zuleitungen zur Anregung und Signalzu- bzw. -abführung für den mindestens einen Schwinger (21, 22) bilden, wobei der Rahmen, die Schwinger und die Stege (41 - 48) aus einem monokristallinen Siliziumwafer herausstrukturiert sind, mit Mitteln zur Anregung der Schwinger in einer ersten Schwingungsrichtung, wobei, als Mittel zur Erfassung von Schwingungen in einer senkrecht zur ersten Schwingungsrichtung orientierten zweiten Schwingungsrichtung, der mindestens eine Schwinger (21, 22) eine Elektrodenseite eines Plattenkondensators bildet und dem mindestens einen Schwinger (21, 22) gegenüber auf der mindestens einen Abdeckung (401, 402) in der zweiten Schwingungsrichtung mindestens eine feststehende Elektrode (23, 24) als weitere Elektrode des Plattenkondensators angeordnet ist, dadurch gekennzeichnet, daß das Sensorelement (1) aus einem Siliziumwafer strukturiert ist, der in drei Schichten aus einem Substrat (3), auf dessen Oberseite und Unterseite jeweils eine weitere Schicht (2a, 2b) aufgebracht ist, aufgebaut ist, daß zwischen den weiteren Schichten (2a, 2b) und dem Substrat (3) Dotierungsübergänge bestehen, daß die Stege (41, 48) der Schwinger (21, 22) in den weiteren Schichten (2a, 2b) ausgebildet sind und daß die Schwinger (21, 22) mindestens eine aus dem Substrat (3) herausstrukturierte seismische Masse (13) von der Dicke des Substrats (3) aufweisen.

2. Drehratensensor mit mindestens einer Abdeckung und einem Sensorelement (1), das einen festen Rahmen (10) aufweist, mindestens einen Schwinger (21,22), vorzugsweise mindestens ein Paar von Schwingern (21,22), die mindestens in zwei aufeinander senkrecht stehenden Richtungen schwingungsfähig sind, wobei der mindestens eine Schwinger (21, 22) mit einem oder mehreren Stegen (41 - 48) mit dem Rahmen (10) verbunden ist, wobei die Stege (41 - 48) elektrische Zuleitungen zur Anregung und Signalzu- bzw. -abführung für den mindestens einen Schwinger (21, 22) bilden, wobei der Rahmen, die Schwinger und die Stege (41 - 48) aus einem monokristallinen Siliziumwafer herausstrukturiert sind, mit Mitteln zur Anregung der Schwinger in einer ersten Schwingungsrichtung, wobei, als Mittel zur Erfassung von Schwingungen in einer senkrecht zur ersten Schwingungsrichtung orientierten zweiten Schwingungsrichtung, der mindestens eine Schwinger (21, 22) eine Elektrodenseite eines Plattenkondensators bildet und dem mindestens einen Schwinger (21, 22) gegenüber auf der mindestens einen Abdeckung (401, 402) in der zweiten Schwingungsrichtung mindestens eine feststehende Elektrode (23, 24) als weitere Elektrode des Plattenkondensators angeordnet ist, dadurch gekennzeichnet, daß das Sensorelement (1) aus einem Siliziumwafer strukturiert ist, der in drei Schichten aus einem p-Substrat (3) auf dessen Oberseite und Unterseite jeweils eine p-dotierte Schicht (5a, 5b) aufgebracht ist, aufgebaut ist, daß die Stege (41, 48) der Schwinger (21, 22) in den p-dotierten Schichten (5a, 5b) ausgebildet sind, daß die p-dotierten Schichten (5a, 5b) im Bereich der Stege (41 - 48) vergrabene n-dotierte Gebiete (6a, 6b) aufweisen und daß die Schwinger (21, 22) mindestens eine aus dem Substrat (3) herausstrukturierte seismische Masse (13) von der Dicke des Substrats (3) aufweisen.

3. Drehratensensor mit mindestens einer Abdeckung und einem Sensorelement (1), das einen festen Rahmen (10) aufweist, mindestens einen Schwinger (21,22), vorzugsweise mindestens ein Paar von Schwingern (21,22), die mindestens in zwei aufeinander senkrecht stehenden Richtungen schwingungsfähig sind, wobei der mindestens eine Schwinger (21, 22) mit einem oder mehreren Stegen (41 - 48) mit dem Rahmen (10) verbunden ist, wobei die Stege (41 - 48) elektrische Zuleitungen zur Anregung und Signalzu- bzw. -abführung für den mindestens einen Schwinger (21, 22) bilden, wobei der Rahmen, die Schwinger und die Stege (41 - 48) aus einem monokristallinen Siliziumwafer herausstrukturiert sind, mit Mitteln zur Anregung der Schwinger in einer ersten Schwingungsrichtung, wobei, als Mittel zur Erfassung von Schwingungen in einer senkrecht zur ersten Schwingungsrichtung orientierten zweiten Schwingungsrichtung, der mindestens eine Schwinger (21, 22) eine Elektrodenseite eines Plattenkondensators bildet und dem mindestens einen Schwinger (21, 22) gegenüber auf der mindestens einen Abdeckung (401, 402) in der zweiten Schwingungsrichtung mindestens eine feststehende Elektrode (23, 24) als weitere Elektrode des Plattenkondensators angeordnet ist, dadurch gekennzeichnet, daß das Sensorelement (1) aus einem Siliziumwafer strukturiert ist, der in zwei Schichten aus einem Substrat (3) und einer darauf aufgebrachten Ätzstopschicht (2) aufgebaut ist, und daß zwischen der Ätzstopschicht (2) und dem Substrat (3) ein Dotierungsübergang besteht, daß die Stege (41 - 44) und die Schwinger (21, 22) in der Ätzstopschicht (2) ausgebildet sind, daß elektrische Anschlüsse (31 - 33) für die Schwinger (21, 22) in die Ätzstopschicht (2) des Rahmens (10) eingebracht sind, so daß sie eine mechanische Verbindung mit dem Substrat (3) bilden, und daß die Anschlüsse (31 - 33) der Schwinger (21, 22) durch einen p/n-Übergang zwischen dem Substrat (3) und der Ätzstopschicht (2) und durch Ätzgräben (11), die die Ätzstopschicht (2) vollständig durchdringen, elektrisch voneinander isoliert sind.

4. Drehratensensor nach einem der vorhergehenden Ansprüche, dadurch gekennzeichnet, daß die Aufhängungsstege (41 - 48) der Schwinger (21, 22) in Anregungsrichtung mindestens eine erste kammförmige Struktur aufweisen, daß der ersten kammförmigen Struktur gegenüber mindestens eine feststehende Elektrode (25) angeordnet ist, die mindestens eine zweite kammförmige Struktur aufweist, und daß die Finger (51) der ersten kammförmigen Struktur in die Finger (52) der zweiten kammförmigen Struktur greifen.

5. Drehratensensor nach Anspruch 4, dadurch gekennzeichnet, daß Mittel zum Anlegen einer Spannung zwischen den Aufhängungsstegen (41) der Schwinger (21, 22) und den entsprechenden feststehenden Elektroden (25) vorhanden sind.

6. Drehratensensor mit mindestens einer Abdeckung und einem Sensorelement (1), das einen festen Rahmen (10) aufweist, mindestens einen Schwinger (21,22), vorzugsweise mindestens ein Paar von Schwingern (21,22), die mindestens in zwei aufeinander senkrecht stehenden Richtungen schwingungsfähig sind, wobei der mindestens eine Schwinger (21, 22) mit einem oder mehreren Stegen (41 - 48) mit dem Rahmen (10) verbunden ist, wobei die Stege (41 - 48) elektrische Zuleitungen zur Anregung und Signalzu- bzw. -abführung für den mindestens einen Schwinger (21, 22) bilden, wobei der Rahmen, die Schwinger und die Stege (41 - 48) aus einem monokristallinen Siliziumwafer herausstrukturiert sind, mit Mitteln zur Anregung der Schwinger in einer ersten Schwingungsrichtung, wobei, als Mittel zur Erfassung von Schwingungen in einer senkrecht zur ersten Schwingungsrichtung orientierten zweiten Schwingungsrichtung, der mindestens eine Schwinger (21, 22) eine Elektrodenseite eines Plattenkondensators bildet und dem mindestens einen Schwinger (21, 22) gegenüber auf der mindestens einen Abdeckung (401, 402) in der zweiten Schwingungsrichtung mindestens eine feststehende Elektrode (23, 24) als weitere Elektrode des Plattenkondensators angeordnet ist, dadurch gekennzeichnet, daß das Sensorelement (1) aus einem Siliziumwafer strukturiert ist, der in zwei Schichten aus einem Substrat (3) und einer darauf aufgebrachten Ätzstopschicht (2) aufgebaut ist, daß zwischen der Ätzstopschicht (2) und dem Substrat (3) ein Dotierungsübergang besteht, daß die Schwinger (21, 22) in der Ätzstopschicht (2) paddelförmig ausgebildet sind und daß die Stege (41 - 44) in der gesamten Dicke des Siliziumwafers ausgebildet sind.

7. Drehratensensor nach Anspruch 6, dadurch gekennzeichnet, daß den Stegen (41 - 44) gegenüber in Anregungsrichtung im Rahmen (11) feststehende Gegenelektroden (25) parallel zu den Stegen (41 - 44) angeordnet sind und daß Mittel zur Krafteinleitung zwischen den Stegen (41 - 44) und den entsprechenden Gegenelektroden (25) im Rahmen (10) vorhanden sind.

8. Drehratensensor nach einem der Ansprüche 6 oder 7, dadurch gekennzeichnet, daß mindestens ein Paar von Schwingern (21, 22) an jeweils zwei oder mehr Stegen (41 - 48) einseitig oder zweiseitig mit dem Rahmen (10) verbunden sind und daß die durch die Stege (41 - 48) gebildeten Aufhängungen der mindestens zwei Schwinger (21, 22) parallel zueinander und senkrecht zur Anregungsrichtung ausgerichtet sind.

9. Drehratensensor nach einem der Ansprüche 1 - 8, dadurch gekennzeichnet, daß ein Hohlraum zwischen der Abdeckung und dem Sensorelement (1) durch eine Kaverne in der Abdeckung (401, 402) erzeugt ist.

10. Drehratensensor nach einem der Ansprüche 1 - 8, dadurch gekennzeichnet, daß ein Hohlraum zwischen der Abdeckung und dem Sensorelement (1) durch eine Reduzierung der Dicke des Sensorelementes (1) mindestens im Bereich der Schwinger (21, 22) und der Aufhängungsstege (41 - 48) erzeugt ist.

11. Drehratensensor nach einem der vorhergehenden Ansprüche, dadurch gekennzeichnet, daß auf der mindestens einen feststehenden Elektrode (23, 24) und/oder auf der Elektrode des Sensorelementes (1) mindestens ein Abstandshalter aufgebracht ist.

12. Drehratensensor nach Anspruch 11, dadurch gekennzeichnet, daß die Schwinger (21, 22) an der der mindestens einen feststehenden Elektrode (23, 24) zugewandten Oberfläche Abstandshalter (14) in Form von Erhebungen aufweisen, die nur eine Annäherung der Schwinger (21, 22) an die mindestens eine feststehende Elektrode (23, 24) bis zu einem Abstand entsprechend der Höhe der Abstandshalter (14) ermöglichen.

13. Drehratensensor nach einem der vorhergehenden Ansprüche, dadurch gekennzeichnet, daß das Sensorelement (1) aus einem Siliziumwafer mit (110)-Kristallorientierung strukturiert ist.

14. Drehratensensor nach einem der vorhergehenden Ansprüche, dadurch gekennzeichnet, daß mindestens ein Paar von Schwingern (21, 22) an jeweils zwei oder mehr Stegen (41 - 48) zweiseitig mit dem Rahmen (10) verbunden ist, daß die durch die Stege (41 - 48) gebildeten Aufhängungen der mindestens zwei Schwinger (21, 22) parallel zueinander und senkrecht zur Anregungsrichtung ausgerichtet sind und daß die Aufhängung jedes einzelnen Schwingers (21, 22) symmetrisch zu seiner Mittelachse (23, 24) in Richtung der Aufhängung ist.

15. Drehratensensor nach Anspruch 14, dadurch gekennzeichnet, daß mindestens ein Anschluß (32) auf dem Rahmen (10) so angeordnet ist, daß er eine leitende Verbindung zwischen den zwei Schwingern (21, 22) eines Paares herstellt, so daß sie hintereinander geschaltet sind, und daß mindestens zwei weitere Anschlüsse (31, 33) auf dem Rahmen (10) so angeordnet sind, daß beim Anlegen einer Spannung an die weiteren Anschlüsse (31, 33) ein Strom über die Aufhängungsstege (41 - 48) durch die hintereinander geschalteten Schwinger (21, 22) fließt.

16. Drehratensensor nach Anspruch 14 oder 15, dadurch gekennzeichnet, daß Mittel zum Anlegen eines Magnetfeldes vorhanden sind, das senkrecht zur Richtung des durch die Schwinger (21, 22) fließenden Stromes und senkrecht zur Anregungsrichtung orientiert ist.

17. Drehratensensor nach einem der Ansprüche 1 bis 5, dadurch gekennzeichnet, daß mindestens ein Paar von Schwingern (21, 22) an jeweils zwei oder mehr Stegen (41 - 48) zweiseitig mit dem Rahmen (10) verbunden ist, und daß die durch die Stege (41 - 48) gebildeten Aufhängungen der mindestens zwei Schwinger (21, 22) unter einem geringen Fehlwinkel parallel zueinander und senkrecht zur Anregungsrichtung orientiert sind, so daß eine Längenänderung der Stege (41 - 48) zu gegenläufigen Auslenkungsrichtungen der Schwinger (21, 22) führt.

18. Drehratensensor nach Anspruch 17, dadurch gekennzeichnet, daß die Anregung der Schwinger (21, 22) in der ersten Schwingungsrichtung thermomechanisch erfolgt.

19. Drehratensensor nach Anspruch 17 oder 18, dadurch gekennzeichnet, daß Mittel zum Anlegen von Stromimpulsen an die Stege (41 - 48) vorhanden sind, die eine Längenänderung der Stege (41 - 48) bewirken.

20. Drehratensensor nach einem der Ansprüche 1 bis 5, dadurch gekennzeichnet, daß den Schwingern (21, 22) gegenüber in Anregungsrichtung im Rahmen (10) feststehende Gegenelektroden (25) parallel zu den Schwingern (21, 22) angeordnet sind und daß Mittel zur Krafteinleitung zwischen den Schwingern (21, 22) und den entsprechenden Gegenelektroden (25) im Rahmen vorhanden sind.

21. Drehratensensor nach Anspruch 20, dadurch gekennzeichnet, daß die Anregung der Schwinger (21, 22) in der ersten Schwingungsrichtung elektrostatisch erfolgt.

22. Drehratensensor nach Anspruch 20 oder 21, dadurch gekennzeichnet, daß mindestens ein Paar von Schwingern (21, 22) an jeweils zwei oder mehr Stegen (41 - 48) einseitig mit dem Rahmen (10) verbunden ist und daß die durch die Stege (41 - 48) gebildeten Aufhängungen der Schwinger eines Paares (21, 22) parallel zueinander und senkrecht zur Anregungsrichtung ausgerichtet sind.

23. Drehratensensor nach einem der vorhergehenden Ansprüche, dadurch gekennzeichnet, daß der feste Rahmen (10) gitterförmig ist.

24. Drehratensensor nach Anspruch 23, dadurch gekennzeichnet, daß von mindestens einer Strebe (102) des gitterförmigen Rahmens (10) zweiseitig, paarweise Schwinger (21, 22) ausgehen und zusammen mit der mindestens einen Strebe (102) Mehrfachstimmgabelstrukturen bilden, wobei die Schwinger (21, 22) einseitig oder zweiseitig über Stege (41 - 48) mit dem Rahmen (10) verbunden sind.

25. Drehratensensor nach Anspruch 23 oder 24, dadurch gekennzeichnet, daß die Schwingungsanregung über ein Schwingerpaar (211, 212) erfolgt, wodurch mindestens ein weiteres damit gekoppeltes Schwingerpaar (221, 222) in Schwingungen versetzt wird, und daß der Signalabgriff an dem weiteren Schwingerpaar (221, 222) erfolgt.

26. Verfahren zur Herstellung eines Drehratensensors nach Anspruch 3, dadurch gekennzeichnet, daß in einem ersten Verfahrensabschnitt die von der Ätzstopschicht (2) gebildete Vorderseite und die Rückseite des Siliziumwafers (10) passiviert werden, daß die Passivierschicht (70) auf der Vorderseite dermaßen strukturiert wird, daß Ätzfenster (80) in den Bereichen entstehen, in denen die Schwinger (21, 22) und die Stege (41 - 44) ausgebildet werden, daß die Ätzstopschicht (2) durch Ätzen in diesen Bereichen in ihrer Dicke reduziert wird und daß anschließend die Passivierschichten (70, 71) der Vorderseite und der Rückseite entfernt werden, daß in einem zweiten Verfahrensabschnitt die strukturierte Vorderseite und die Rückseite passiviert werden, daß die Passivierschicht (701) auf der Rückseite dermaßen strukturiert wird, daß Ätzfenster (83) in den Bereichen entstehen, in denen die Schwinger (21, 22) und die Stege (41 - 44) ausgebildet werden und dort, wo der Wafer (10) vollständig durchgeätzt wird, daß die Passivierschicht (701) auf der Vorderseite dermaßen strukturiert wird, daß Ätzfenster (81) in den Bereichen entstehen, in denen der Wafer (10) vollständig durchgeätzt wird, daß die Rückseite im Bereich der Ätzfenster (83) anisotrop bis zur Ätzstopschicht (2) geätzt wird, daß die strukturierte Rückseite passiviert wird, daß die Ätzstopschicht (2) in den Bereichen der Ätzfenster (81) vollständig durchgeätzt wird und daß die Passivierschichten (701, 712) der Vorderseite und der Rückseite entfernt werden.

27. Verfahren nach Anspruch 26, dadurch gekennzeichnet, daß zur Passivierung der unstrukturierten Rückseite im zweiten Verfahrensabschnitt eine Oxidschicht mit einer darauf aufgebrachten Nitridschicht verwendet wird und daß die Nitridschicht nach der Strukturierung der Rückseite entfernt wird.

28. Verfahren zur Herstellung eines Drehratensensors nach Anspruch 1, dadurch gekennzeichnet, daß in einem ersten Verfahrensabschnitt die beiden Hauptoberflächen des Siliziumwafers (10) passiviert werden, daß die Passivierschichten (70a, 70b) dermaßen strukturiert werden, daß Ätzfenster (80a, 80b) in den Bereichen entstehen, in denen die Schwinger (21, 22) und die Stege (41 - 44) ausgebildet werden, daß die weiteren Schichten (2a, 2b) durch Ätzen in diesen Bereichen in ihrer Dicke reduziert werden und daß anschließend die Passivierschichten (70a, 70b) entfernt werden, daß in einem zweiten Verfahrensabschnitt die strukturierten Hauptoberflächen passiviert werden, daß die Passivierschichten (701a, 701b) dermaßen strukturiert werden, daß Ätzfenster (81a, 81b) in den Bereichen entstehen, in denen der Wafer (10) vollständig durchgeätzt wird, daß die weiteren Schichten (2a, 2b) in den Bereichen der Ätzfenster (81a, 81b) vollständig durchgeätzt werden, daß das Substrat (3) in den Bereichen der Stege (41 - 48) von Öffnungen in den beiden weiteren Schichten (2a, 2b) ausgehend weggeätzt wird, so daß Unterätzungen (86) entstehen, die das Substrat (3) vollständig durchdringen, daß bei der Unterätzung der Stege (41 - 48) die weiteren Schichten (2a, 2b) als Ätzstopschichten dienen und daß die Passivierschichten (701a, 701b) entfernt werden.

29. Verfahren nach einem der Ansprüche 26 bis 28, dadurch gekennzeichnet, daß die Ätzstopschichten (2, 2a, 2b) p⁺ dotiert sind.

30. Verfahren nach einem der Ansprüche 26 bis 28, dadurch gekennzeichnet, daß Dotierungsübergänge zwischen dem Substrat (3) und den Ätzstopschichten (2, 2a, 2b) p/n-Übergänge sind.

31. Verfahren nach Anspruch 30, dadurch gekennzeichnet, daß beim Ätzen des Substrats (3) die Ätzstopschichten (2, 2a, 2b) durch Anlegen einer Spannung in Sperrichtung an die p/n-Übergänge passiviert werden.

32. Verfahren nach Anspruch 28, dadurch gekennzeichnet, daß vor dem ersten Verfahrensabschnitt zum dreischichtigen Aufbau des Siliziumwafers (10) die beiden Hauptoberflächen eines p-dotierten Substrats (3) in den Bereichen in denen die Stege (41 - 48) ausgebildet werden, und in einem Verbindungsbereich zu mindestens einem Ätzstopanschluß (74a, 74b) auf jeder der beiden Hauptoberflächen maskiert werden, daß in die beiden maskierten Hauptoberflächen p⁺-Dotierungen eingetrieben werden, daß dann die Maskierungen (72a, 72b) entfernt werden, daß dann auf den beiden Hauptoberflächen jeweils eine N-Epitaxieschicht (2a, 2b) abgeschieden wird, daß die n-Epitaxieschichten (2a, 2b) im Bereich der Ätzstopanschlüsse (74a, 74b) passiviert werden, daß dann auf die Oberflächen jeweils eine positive Ionen enthaltende Glasschicht (73a, 73b) aufgebracht wird, daß in einem weiteren Prozeßschritt, vorzugsweise durch Erhitzen die p⁺-Dotierung der p⁺-Schichten (2a, 2b) und die positiven Ionen der Glasschichten (73a, 73b) in die n-Epitaxieschichten (2a, 2b) eingetrieben werden, so daß sie sich überlappen und nur in den ursprünglich maskierten Bereichen n-Gebiete (6a, 6b, 2a, 2b) verbleiben, und daß dann die Glasschichten (73a, 73b) entfernt werden.

33. Verfahren nach Anspruch 31 oder 32, dadurch gekennzeichnet, daß die Glasschichten (73a, 73b) Bor-Ionen enthalten.

## Claims

1. Rate-of-rotation sensor having at least one cover and a sensor element (1) which exhibits a fixed frame (10), at least one oscillator (21, 22), preferably at least one pair of oscillators (21, 22), which are capable of oscillation at least in two mutually perpendicular directions, in which the at least one oscillator (21, 22) is connected to the frame (10) by one or more webs (41 - 48), in which the webs (41 - 48) form electrical supply leads for excitation and signal input and respectively signal output for the at least one oscillator (21, 22), in which the frame, the oscillators and the webs (41 - 48) are structured out from a monocrystalline silicon wafer, having means for exciting the oscillators in a first direction of oscillation, in which, as means for picking up oscillations in a second direction of oscillation, which is oriented perpendicular to the first direction of oscillation, the at least one oscillator (21, 22) forms an electrode side of a plate capacitor and, opposite the at least one oscillator (21, 22), at least one stationary electrode (23, 24) is disposed as further electrode of the plate capacitor on the at least one cover (401, 402) in the second direction of oscillation, characterized in that the sensor element (1) is structured from a silicon wafer, which is constructed in three layers from a substrate (3), to the upper side and lower side of which in each case one further layer (2a, 2b) is applied, in that doping junctions exist between the further layers (2a, 2b) and the substrate (3), in that the webs (41, 48) of the oscillators (21, 22) are formed in the further layers (2a, 2b), and in that the oscillators (21, 22) exhibit at least one seismic mass (13), structured out from the substrate (3), of the thickness of the substrate (3).

2. Rate-of-rotation sensor having at least one cover and a sensor element (1) which exhibits a fixed frame (10), at least one oscillator (21, 22), preferably at least one pair of oscillators (21, 22), which are capable of oscillation at least in two mutually perpendicular directions, in which the at least one oscillator (21, 22) is connected to the frame (10) by one or more webs (41 - 48), in which the webs (41 - 48) form electrical supply leads for excitation and signal input and respectively signal output for the at least one oscillator (21, 22), in which the frame, the oscillators and the webs (41 - 48) are structured out from a monocrystalline silicon wafer, having means for exciting the oscillators in a first direction of oscillation, in which, as means for picking up oscillations in a second direction of oscillation, which is oriented perpendicular to the first direction of oscillation, the at least one oscillator (21, 22) forms an electrode side of a plate capacitor and, opposite the at least one oscillator (21, 22), at least one stationary electrode (23, 24) is disposed as further electrode of the plate capacitor on the at least one cover (401, 402) in the second direction of oscillation, characterized in that the sensor element (1) is structured from a silicon wafer, which is constructed in three layers from a p-substrate (3) to the upper side and lower side of which in each case one p-doped layer (5a, 5b) is applied, in that the webs (41, 48) of the oscillators (21, 22) are formed in the p-doped layers (5a, 5b), in that the p-doped layers (5a, 5b) exhibit n-doped regions (6a, 6b) which are buried in the region of the webs (41 - 48), and in that the oscillators (21, 22) exhibit at least one seismic mass (13), structured out from the substrate (3), of the thickness of the substrate (3).

3. Rate-of-rotation sensor having at least one cover and a sensor element (1) which exhibits a fixed frame (10), at least one oscillator (21, 22), preferably at least one pair of oscillators (21, 22), which are capable of oscillation at least in two mutually perpendicular directions, in which the at least one oscillator (21, 22) is connected to the frame (10) by one or more webs (41 - 48), in which the webs (41 - 48) form electrical supply leads for excitation and signal input and respectively signal output for the at least one oscillator (21, 22), in which the frame, the oscillators and the webs (41 - 48) are structured out from a monocrystalline silicon wafer, having means for exciting the oscillators in a first direction of oscillation, in which, as means for picking up oscillations in a second direction of oscillation, which is oriented perpendicular to the first direction of oscillation, the at least one oscillator (21, 22) forms an electrode side of a plate capacitor and, opposite the at least one oscillator (21, 22), at least one stationary electrode (23, 24) is disposed as further electrode of the plate capacitor on the at least one cover (401, 402) in the second direction of oscillation, characterized in that the sensor element (1) is structured from a silicon wafer, which is constructed in two layers from a substrate (3) and an etch stop layer (2) applied thereto, and in that a doping junction exists between the etch stop layer (2) and the substrate (3), in that the webs (41 - 44) and the oscillators (21, 22) are formed in the etch stop layer (2), in that electrical leads (31 - 33) for the oscillators (21, 22) are introduced into the etch stop layer (2) of the frame (10), so that they form a mechanical connection with the substrate (3), and in that the leads (31 - 33) of the oscillators (21, 22) are electrically insulated from one another by a p/n junction between the substrate (3) and the etch stop layer (2) and by etch trenches (11), which fully penetrate the etch stop layer (2).

4. Rate-of-rotation sensor according to one of the preceding claims, characterized in that the suspension webs (41 - 48) of the oscillators (21, 22) exhibit in the excitation direction at least one first comb-shaped structure, in that opposite the first comb-shaped structure there is disposed at least one stationary electrode (25), which exhibits at least one second comb-shaped structure, and in that the fingers (51) of the first comb-shaped structure engage into the fingers (52) of the second comb-shaped structure.

5. Rate-of-rotation sensor according to Claim 4, characterized in that means for applying a voltage between the suspension webs (41) of the oscillators (21, 22) and the corresponding stationary electrodes (25) are provided.

6. Rate-of-rotation sensor having at least one cover and a sensor element (1) which exhibits a fixed frame (10), at least one oscillator (21, 22), preferably at least one pair of oscillators (21, 22), which are capable of oscillation at least in two mutually perpendicular directions, in which the at least one oscillator (21, 22) is connected to the frame (10) by one or more webs (41 - 48), in which the webs (41 - 48) form electrical supply leads for excitation and signal input and respectively signal output for the at least one oscillator (21, 22), in which the frame, the oscillators and the webs (41 - 48) are structured out from a monocrystalline silicon wafer, having means for exciting the oscillators in a first direction of oscillation, in which, as means for picking up oscillations in a second direction of oscillation, which is oriented perpendicular to the first direction of oscillation, the at least one oscillator (21, 22) forms an electrode side of a plate capacitor and, opposite the at least one oscillator (21, 22), at least one stationary electrode (23, 24) is disposed as further electrode of the plate capacitor on the at least one cover (401, 402) in the second direction of oscillation, characterized in that the sensor element (1) is structured from a silicon wafer, which is constructed in two layers from a substrate (3) and an etch stop layer (2) applied thereto, in that a doping junction exists between the etch stop layer (2) and the substrate (3), in that the oscillators (21, 22) are formed in paddle fashion in the etch stop layer (2), and in that the webs (41 - 44) are formed in the total thickness of the silicon wafer.

7. Rate-of-rotation sensor according to Claim 6, characterized in that, opposite the webs (41 - 44) in the excitation direction, stationary counter electrodes (25) are disposed in the frame (11) parallel to the webs (41 - 44), and in that means for the application of force between the webs (41 - 44) and the corresponding counter electrodes (25) are provided in the frame (10).

8. Rate-of-rotation sensor according to one of Claims 6 or 7, characterized in that at least one pair of oscillators (21, 22) on in each case two or more webs (41 - 48) are connected to the frame (10) on one side or both sides, and in that the suspensions, formed by the webs (41 - 48), of the at least two oscillators (21, 22) are aligned parallel to one another and perpendicular to the excitation direction.

9. Rate-of-rotation sensor according to one of Claims 1 - 8, characterized in that a cavity is generated, between the cover and the sensor element (1), by a hollow in the cover (401, 402).

10. Rate-of-rotation sensor according to one of Claims 1 - 8, characterized in that a cavity is generated, between the cover and the sensor element (1), by a reduction of the thickness of the sensor element (1) at least in the region of the oscillators (21, 22) and the suspension webs (41 - 48).

11. Rate-of-rotation sensor according to one of the preceding claims, characterized in that at least one spacer is applied to the at least one stationary electrode (23, 24) and/or to the electrode of the sensor element (1).

12. Rate-of-rotation sensor according to Claim 11, characterized in that the oscillators (21, 22) exhibit, at the surface which faces towards the at least one stationary electrode (23, 24), spacers (14) in the form of elevations, which permit only an approach of the oscillators (21, 22) to the at least one stationary electrode (23, 24) as far as a spacing corresponding to the height of the spacers (14).

13. Rate-of-rotation sensor according to one of the preceding claims, characterized in that the sensor element (1) is structured from a silicon wafer having (110) crystal orientation.

14. Rate-of-rotation sensor according to one of the preceding claims, characterized in that at least one pair of oscillators (21, 22) on in each case two or more webs (41 - 48) is connected to the frame (10) on two sides, in that the suspensions, formed by the webs (41 - 48), of the at least two oscillators (21, 22) are aligned parallel to one another and perpendicular to the excitation direction, and in that the suspension of each individual oscillator (21, 22) is symmetrical with respect to its central axis (23, 24) in the direction of the suspension.

15. Rate-of-rotation sensor according to Claim 14, characterized in that at least one lead (32) is disposed on the frame (10) so that it creates a conductive connection between the two oscillators (21, 22) of a pair, so that they are connected in series, and in that at least two further leads (31, 33) are disposed on the frame (10) so that upon application of a voltage to the further leads (31, 33) a current flows via the suspension webs (41 - 48) through the oscillators (21, 22) connected in series with one another.

16. Rate-of-rotation sensor according to Claim 14 or 15, characterized in that means for applying a magnetic field are provided, which magnetic field is oriented perpendicular to the direction of the current flowing through the oscillators (21, 22) and perpendicular to the excitation direction.

17. Rate-of-rotation sensor according to one of Claims 1 to 5, characterized in that at least one pair of oscillators (21, 22) on in each case two or more webs (41 - 48) is connected to the frame (10) on two sides, and in that the suspensions, formed by the webs (41 - 48), of the at least two oscillators (21, 22) are oriented at a small shift angle parallel to one another and perpendicular to the excitation direction, so that a change in length of the webs (41 - 48) leads to oppositely directed deflection directions of the oscillators (21, 22).

18. Rate-of-rotation sensor according to Claim 17, characterized in that the excitation of the oscillators (21, 22) in the first direction of oscillation takes place thermomechanically.

19. Rate-of-rotation sensor according to Claim 17 or 18, characterized in that means for applying voltage pulses to the webs (41 - 48) are provided, which effect a change in length of the webs (41 - 48).

20. Rate-of-rotation sensor according to one of Claims 1 to 5, characterized in that, opposite to the oscillators (21, 22) in the excitation direction stationary counter electrodes (25) are disposed in the frame (10) parallel to the oscillators (21, 22), and in that means for the application of force between the oscillators (21, 22) and the corresponding counter electrodes (25) in the frame are provided.

21. Rate-of-rotation sensor according to Claim 20, characterized in that the excitation of the oscillators (21, 22) in the first direction of oscillation takes place electrostatically.

22. Rate-of-rotation sensor according to Claim 20 or 21, characterized in that at least one pair of oscillators (21, 22) on in each case two or more webs (41 - 48) is connected to the frame (10) on one side, and in that the suspensions, formed by the webs (41 - 48), of the oscillators of a pair (21, 22) are aligned parallel to one another and perpendicular to the excitation direction.

23. Rate-of-rotation sensor according to one of the preceding claims, characterized in that the fixed frame (10) is latticed.

24. Rate-of-rotation sensor according to Claim 23, characterized in that oscillators (21, 22) proceed in pairs on two sides from at least one strut (102) of the latticed frame (10) and form, together with the at least one strut (102), multiple tuning fork structures, the oscillators (21, 22) being connected to the frame (10) on one side or two sides via webs (41 - 48).

25. Rate-of-rotation sensor according to Claim 23 or 24, characterized in that the oscillation excitation takes place via a pair of oscillators (211, 212), whereby at least one further pair of oscillators (221, 222) coupled thereto is displaced into oscillations, and in that the signal tap takes place at the further pair of oscillators (221, 222).

26. Method for producing a rate-of-rotation sensor according to Claim 3, characterized in that in a first method step the front side formed by the etch stop layer (2), and the rear side of the silicon wafer (10) are passivated, in that the passivation layer (70) on the front side is structured so that etch windows (80) are created in the regions in which the oscillators (21, 22) and the webs (41 - 44) are formed, in that the etch stop layer (2) is reduced in its thickness by etching in these regions, and in that subsequently the passivation layers (70, 71) of the front side and of the rear side are removed, in that in a second method step the structured front side and the rear side are passivated, in that the passivation layer (701) on the rear side is structured so that etch windows (83) are created in the regions in which the oscillators (21, 22) and the webs (41 - 44) are formed and where the wafer (10) is fully etched through, that the passivation layer (701) on the front side is structured so that etch windows (81) are created in the regions in which the wafer (10) is fully etched through, in that the rear side is etched in the region of the etch windows (83) anisotropically as far as the etch stop layer (2), in that the structured rear side is passivated, in that the etch stop layer (2) is fully etched through in the regions of the etch windows (81), and in that the passivation layers (701, 712) of the front side and of the rear side are removed.

27. Method according to Claim 26, characterized in that an oxide layer with a nitride layer applied thereto is used to passivate the unstructured rear side in the second method step, and in that the nitride layer is removed after the structuring of the rear side.

28. Method for producing a rate-of-rotation sensor according to Claim 1, characterized in that in a first method step the two principal surfaces of the silicon wafer (10) are passivated, in that the passivation layers (70a, 70b) are structured so that etch windows (80a, 80b) are created in the regions in which the oscillators (21, 22) and the webs (41 - 44) are formed, in that the further layers (2a, 2b) are reduced in their thickness by etching in these regions, and in that subsequently the passivation layers (70a, 70b) are removed, in that in a second method step the structured principal surfaces are passivated, in that the passivation layers (701a, 701b) are structured so that etch windows (81a, 81b) are created in the regions in which the wafer (10) is fully etched through, in that the further layers (2a, 2b) are fully etched through in the regions of the etch windows (81a, 81b), in that the substrate (3) is etched away in the regions of the webs (41 - 48), proceeding from openings in the two further layers (2a, 2b), so that subetchings (86) are created, which fully penetrate the substrate (3), in that in the subetching of the webs (41 - 48) the further layers (2a, 2b) serve as etch stop layers, and in that the passivation layers (701a, 701b) are removed.

29. Method according to one of Claims 26 to 28, characterized in that the etch stop layers (2, 2a, 2b) are p⁺-doped.

30. Method according to one of Claims 26 to 28, characterized in that doping junctions between the substrate (3) and the etch stop layers (2, 2a, 2b) are p/n junctions.

31. Method according to Claim 30, characterized in that in the etching of the substrate (3) the etch stop layers (2, 2a, 2b) are passivated by application of a voltage in the inhibiting direction to the p/n junctions.

32. Method according to Claim 28, characterized in that before the first method step for the three-layer structure of the silicon wafer (10) the two principal surfaces of a p-doped substrate (3) are masked in the regions in which the webs (41 - 48) are formed, and in a region of connection to at least one etch stop contact (74a, 74b) on each one of the two principal surfaces, in that p⁺-dopings are injected into the two masked principal surfaces, in that the maskings (72a, 72b) are then removed, in that in each case one N-epitaxial layer (2a, 2b) is then deposited on the two principal surfaces, in that the n-epitaxial layers (2a, 2b) are passivated in the region of the etch stop contacts (74a, 74b), in that in each case one glass layer (73a, 73b) containing positive ions is then applied to the surfaces, in that in a further process step, preferably by heating, the p⁺-doping of the p⁺-layers (2a, 2b) and the positive ions of the glass layers (73a, 73b) are injected into the n-epitaxial layers (2a, 2b), so that they overlap one another and n-regions (6a, 6b, 2a, 2b) remain only in the originally masked regions, and in that the glass layers (73a, 73b) are then removed.

33. Method according to Claim 31 or 32, characterized in that the glass layers (73a, 73b) contain boron ions.

## Revendications

1. Détecteur de vitesse de rotation comportant au moins un recouvrement et un élément de détecteur (1) ayant un cadre fixe (10), au moins un oscillateur (21, 22), de préférence au moins une paire d'oscillateurs (21, 22) qui peuvent osciller au moins dans deux directions perpendiculaires, au moins un oscillateur (21, 22) étant relié par une ou plusieurs entretoises (41-48) au cadre (10), des entretoises (41-48) formant des conducteurs d'alimentation électrique pour l'excitation et l'alimentation ou l'évacuation de signaux d'au moins un oscillateur (21, 22), le cadre, les oscillateurs et les entretoises (41-48) étant obtenus en formant une structure dans une plaquette de silicium monocristallin, avec des moyens pour exciter les oscillateurs dans une première direction d'oscillation, des moyens pour détecter les oscillations dans une seconde direction d'oscillation orientée perpendiculaire à la première direction d'oscillation, au moins un oscillateur (21, 22) formant un côté de l'électrode d'un condensateur à plaques, et pour au moins cet oscillateur (21, 22), en regard d'au moins un recouvrement (401, 402), dans la seconde direction d'oscillation, il y a au moins une électrode fixe (23, 24) comme autre électrode du condensateur à plaques, détecteur caractérisé en ce que l'élément de détecteur (1) est obtenu par mise en structure d'une plaquette de silicium composée de trois couches formées d'un substrat (3) dont la face supérieure et la face inférieure portent chacune une autre couche (2a, 2b) tandis qu'entre ces autres couches (2a, 2b) et le substrat (3) se trouvent des jonctions de dopage, en ce que les entretoises (41, 48) des oscillateurs (21, 22) sont réalisées dans les autres couches (2a, 2b), et en ce que les oscillateurs (21, 22) ont une masse sismique (13) obtenue par mise en structure dans le substrat (3) en ayant l'épaisseur du substrat (3).

2. Détecteur de vitesse de rotation comprenant au moins un recouvrement et un élément de détecteur (1) qui comporte un cadre fixe (10), au moins un oscillateur (21, 22), de préférence au moins une paire d'oscillateurs (21, 22) susceptible d'osciller dans au moins deux directions perpendiculaires, au moins un oscillateur (21, 22) étant relié au cadre (10) par une ou plusieurs entretoises (41-48), les entretoises (41-48) formant des lignes d'alimentation électrique pour l'excitation, l'alimentation et l'évacuation des signaux d'au moins un oscillateur (21, 22), le cadre, l'oscillateur et l'entretoise (41-48) étant obtenus par mise en structure dans une plaquette de silicium monocristallin, des moyens pour exciter les oscillateurs dans une première direction d'oscillation, et comme moyen pour détecter les oscillations dans une seconde direction d'oscillation orientée perpendiculairement à la première direction d'oscillation, au moins l'un des oscillateurs (21, 22) forme une face d'électrode d'un condensateur à plaques, et pour au moins cet oscillateur (21, 22), en regard sur au moins un revêtement (401, 402), dans la seconde direction d'oscillation, il y a au moins une électrode fixe (23, 24) comme autre électrode du condensateur à plaques, détecteur caractérisé en ce que l'élément de détecteur (1) est obtenu par mise en structure d'une plaquette de silicium formée de trois couches comprenant un substrat p (3) dont la face supérieure et la face inférieure comportent chaque fois une couche à dopage p (5a, 5b) , les entretoises (41, 48) des oscillateurs (21, 22) étant réalisées dans les couches (5a, 5b) à dopage p, les couches (5a, 5b) à dopage p ayant, dans la zone des entretoises (41-48), des domaines à dopage n, enterrés (6a, 6b), et en ce que les oscillateurs (21, 22) comportent au moins une masse sismique (13) ayant l'épaisseur du substrat (3) et qui est obtenue par mise en structure du substrat (3).

3. Détecteur de vitesse de rotation comportant au moins un revêtement et au moins un élément de détecteur (1), avec un cadre fixe (10), au moins un oscillateur (21, 22), de préférence au moins une paire d'oscillateurs (21, 22) qui sont susceptibles d'osciller dans des directions perpendiculaires, au moins un oscillateur (21, 22) étant relié par une ou plusieurs entretoises (41-48) au cadre (10), les entretoises (41-48) formant des lignes d'alimentation électrique pour l'excitation, la transmission et l'évacuation de signaux pour au moins un oscillateur (21, 22) , le cadre, les oscillateurs et les entretoises (41-48) étant obtenus par mise en structure d'une plaquette de silicium monocristallin, des moyens pour exciter les oscillateurs dans une première direction d'oscillation, les moyens pour détecter les oscillations dans une seconde direction d'oscillation orientée perpendiculairement à la première direction d'oscillation, au moins un oscillateur (21, 22) formant un côté de l'électrode d'un condensateur à plaques, et pour au moins un oscillateur (21, 22), en regard d'au moins un revêtement (401, 402), dans la seconde direction d'oscillation, il y a au moins une électrode fixe (23, 24) comme autre électrode du condensateur à plaques, détecteur caractérisé en ce que l'élément de détecteur (1) est obtenu par mise en structure d'une plaquette de silicium réalisée dans deux couches à partir d'un substrat (3) et d'une couche d'arrêt d'attaque chimique (2) appliquée sur celle-ci, et en ce qu'entre la couche d'arrêt d'attaque chimique (2) et le substrat (3) il y a une jonction de dopage, les entretoises (41-44) et l'oscillateur (21, 22) étant réalisés dans la couche d'arrêt d'attaque chimique (2), des branchements électriques (31-33) pour les oscillateurs (21, 22) étant réalisés dans la couche d'arrêt d'attaque chimique (2) du cadre (10) pour former une liaison mécanique avec le substrat (3), et en ce que les branchements (31-33) des oscillateurs (21, 22) sont isolés électriquement par une jonction p/n entre le substrat (3) et la couche d'arrêt d'attaque chimique (2) et par des fossés d'attaque chimique (11) qui traversent complètement la couche d'arrêt d'attaque chimique (2).

4. Détecteur de vitesse de rotation selon l'une des revendications précédentes, caractérisé en ce que les entretoises de suspension (41-48) des oscillateurs (21, 22) présentent au moins une première structure en peigne dans la direction d'excitation, cette première structure en peigne étant disposée en regard d'au moins une électrode fixe (25) qui comporte au moins une seconde structure en peigne, et en ce que les doigts (51) de la première structure en peigne pénètrent dans les doigts (52) de la seconde structure en peigne.

5. Détecteur de vitesse de rotation selon la revendication 4, caractérisé par des moyens pour appliquer une tension entre les entretoises de suspension (41) des oscillateurs (21, 22) et les électrodes fixes correspondantes (25).

6. Détecteur de vitesse de rotation avec au moins un revêtement et un élément de détecteur (1), un cadre fixe (10), au moins un oscillateur (21, 22), de préférence au moins une paire d'oscillateurs (21, 22) qui sont susceptibles d'osciller dans au moins deux directions perpendiculaires, au moins un oscillateur (21, 22) étant relié au cadre (10) par une ou plusieurs entretoises (41-48), les entretoises (41-48) étant des lignes d'alimentation électrique pour l'excitation, l'alimentation et l'évacuation des signaux d'au moins un oscillateur (21, 22), le cadre, l'oscillateur et les entretoises (41-48) étant obtenus par mise en structure d'une plaquette de silicium monocristallin, avec des moyens pour exciter l'oscillateur dans une première direction d'oscillation, des moyens pour détecter les oscillations dans une seconde direction d'oscillation orientée perpendiculairement à la première direction d'oscillation, au moins l'un des oscillateurs (21, 22) formant un côté d'électrode d'un condensateur à plaques, et à au moins un oscillateur (21, 22), par rapport à au moins un revêtement (401, 402), dans la seconde direction d'oscillation, il y a au moins une électrode fixe (23, 24) comme autre électrode du condensateur à plaques, détecteur caractérisé en ce que l'élément de détecteur (1) est obtenu par mise en structure d'une plaquette de silicium composée de deux couches, à savoir d'un substrat (3) sur lequel est déposée une couche d'arrêt d'attaque chimique (2), en ce qu'entre la couche d'arrêt (2) et le substrat (3) il y a une jonction de dopage, les oscillateurs (21, 22) étant réalisés en forme de pales dans la couche d'arrêt (2), et en ce que les entretoises (41-44) sont réalisées dans toute l'épaisseur de la plaquette de silicium.

7. Détecteur de vitesse de rotation selon la revendication 6, caractérisé en ce qu'en regard des entretoises (41-44), dans la direction d'excitation du cadre (11), il y a des électrodes antagonistes (25), fixes, parallèles aux entretoises (41-44), et des moyens sont prévus pour induire des efforts entre les entretoises (41-44) et les contre-électrodes correspondantes (25) dans le cadre (10).

8. Détecteur de vitesse de rotation selon l'une des revendications 6 ou 7, caractérisé par au moins une paire d'oscillateurs (21, 22) reliée chaque fois par deux ou plusieurs entretoises (41-48), d'un côté ou des deux côtés, au cadre (10), et en ce que les suspensions formées par les entretoises (41-48) des deux oscillateurs (21, 22) au moins, sont parallèles entre elles et perpendiculaires à la direction d'excitation.

9. Détecteur de vitesse de rotation selon l'une des revendications 1 à 8, caractérisé par une cavité entre le recouvrement et l'élément de détecteur (1), cavité créée par une caverne dans le recouvrement (401, 402).

10. Détecteur de vitesse de rotation selon l'une des revendications 1 à 8, caractérisé par une cavité, entre le recouvrement et l'élément de détecteur (1), formée par une réduction de l'épaisseur de l'élément de détecteur (1) au moins au niveau des oscillateurs (21, 22) et des entretoises de suspension (41-48).

11. Détecteur de vitesse de rotation selon l'une des revendications précédentes, caractérisé en ce qu'entre au moins une électrode fixe (23, 24) et/ou l'électrode de l'élément de capteur (1) il est prévu au moins un organe d'écartement.

12. Détecteur de vitesse de rotation selon la revendication 11, caractérisé en ce que l'oscillateur (21, 22) présente sur la surface tournée vers au moins une électrode fixe (23, 24), des organes d'écartement (14) en forme de bossages qui ne permettent qu'une approche des oscillateurs (21, 22) à au moins une électrode fixe (23, 24), jusqu'à une distance correspondant à la hauteur des organes d'écartement (14).

13. Détecteur de vitesse de rotation selon l'une des revendications précédentes, caractérisé en ce que l'élément de détecteur (1) est obtenu par mise en structure d'une plaquette de silicium ayant une orientation cristallographique [1.1.0].

14. Détecteur de vitesse de rotation selon l'une des revendications précédentes, caractérisé en ce qu'au moins une paire d'oscillateurs (21, 22) est reliée chaque fois par deux ou plusieurs entretoises (41-48) des deux côtés au châssis (10), en ce que les suspensions formées par les entretoises (41-48) d'au moins deux oscillateurs (21, 22) sont parallèles entre elles et perpendiculaires à la direction d'excitation, et en ce que la suspension de chaque oscillateur séparé (21, 22) est symétrique par rapport à son axe médian (23, 24) dans la direction de la suspension.

15. Détecteur de vitesse de rotation selon la revendication 14, caractérisé en ce qu'au moins un branchement (32) est prévu sur le cadre (10) qui réalise une liaison conductrice entre deux oscillateurs (21, 22) d'une paire pour les brancher l'un derrière l'autre, et en ce qu'au moins deux autres branchements (31, 33) sont prévus sur le cadre (10) de façon qu'en appliquant une tension, les autres branchements (31, 33) soient traversés par un courant passant par les entretoises de suspension (41-48) à travers les oscillateurs (21, 22) en série.

16. Détecteur de vitesse de rotation selon la revendication 14 ou 15, caractérisé par des moyens pour appliquer un champ magnétique orienté perpendiculairement à la direction du courant traversant les oscillateurs (21, 22) et perpendiculairement à la direction d'excitation.

17. Détecteur de vitesse de rotation selon l'une des revendications 1 à 5, caractérisé par au moins une paire d'oscillateurs (21, 22) reliés chaque fois par deux ou plusieurs entretoises (41-48) des deux côtés au cadre (10) et en ce que les suspensions formées par les entretoises (41-48) d'au moins deux oscillateurs (21, 22) sont parallèles avec un angle de défaut faible et sont perpendiculaires à la direction d'excitation pour qu'une variation de longueur des entretoises (41-48) conduise à des directions de débattement antagonistes pour les oscillateurs (21, 22).

18. Détecteur de vitesse de rotation selon la revendication 17, caractérisé en ce que l'excitation des oscillateurs (21, 22) dans la première direction d'oscillation se fait de manière thermomécanique.

19. Détecteur de vitesse de rotation selon la revendication 17 ou 18, caractérisé par des moyens pour appliquer des impulsions de courant aux entretoises (41-48), moyens qui provoquent une variation de longueur des entretoises (41-48).

20. Détecteur de vitesse de rotation selon l'une des revendications 1 à 5, caractérisé en ce qu'en regard des oscillateurs (21, 22) dans la direction d'excitation, dans le cadre (10), il y a des contre-électrodes (25), fixes, parallèles aux oscillateurs (21, 22) et des moyens sont prévus pour induire une force dans le cadre entre les oscillateurs (21, 22) et les contre-électrodes correspondantes (25).

21. Détecteur de vitesse de rotation selon la revendication 20, caractérisé en ce que l'excitation des oscillateurs (21, 22) se fait de manière électrostatique dans la première direction d'oscillation.

22. Détecteur de vitesse de rotation selon la revendication 20 ou 21, caractérisé par au moins une paire d'oscillateurs (21, 22) reliés unilatéralement au cadre (10) par chaque fois au moins deux ou plusieurs entretoises (41-48) , et en ce que les suspensions des oscillateurs d'une paire (21, 22) formée par les entretoises (41-48), sont parallèles en étant perpendiculaires à la direction d'excitation.

23. Détecteur de vitesse de rotation selon l'une des revendications précédentes, caractérisé en ce que le cadre fixe (10) est en forme de grille.

24. Détecteur de vitesse de rotation selon la revendication 23, caractérisé en ce qu'au moins une entretoise (102) du cadre en forme de grille (10), de part et d'autre, part des paires d'oscillateurs (21, 22), et en ce qu'avec au moins une entretoise (102) on forme des structures multiples en diapason, les oscillateurs (21, 22) étant reliés d'un côté ou de deux côtés au cadre (10) par l'intermédiaire des entretoises (41-48).

25. Détecteur de vitesse de rotation selon la revendication 23 ou 24, caractérisé en ce que l'excitation d'oscillation se fait par une paire d'oscillateurs (211, 212), au moins une autre paire d'oscillateurs (221, 222), couplée, se mettant à osciller, et en ce que la prise du signal se fait sur la seconde paire d'oscillateurs (221, 222).

26. Procédé de réalisation d'un détecteur de vitesse de rotation selon la revendication 3, caractérisé en ce que dans une première étape de procédé on passive la face avant formée par la couche d'arrêt d'attaque chimique (2) et la face arrière de la plaquette de silicium (10), on structure la couche de passivation (70) sur la face avant pour former des fenêtres d'attaque chimique (80) dans les zones dans lesquelles on veut réaliser les oscillateurs (21, 22) et les entretoises (41-44), on réduit l'épaisseur de la couche d'arrêt d'attaque chimique (2) par attaque chimique de ces zones, et on enlève les couches de passivation (70, 71) de la face avant et de la face arrière et, dans une seconde étape du procédé, on passive la face avant structurée et la face arrière et on structure la couche de passivation (701) sur la face arrière pour former dans ces zones des fenêtres d'attaque chimique (83) dans lesquelles on réalise les oscillateurs (21, 22) et les entretoises (41-44) et, là où la plaquette (10) a été attaquée complètement, on structure la couche de passivation (701) sur la face avant pour former des fenêtres d'attaque chimique (80) dans ces zones dans lesquelles la plaquette (10) a été complètement attaquée et on attaque la face arrière au niveau des fenêtres d'attaque chimique (83) de manière anisotrope jusqu'à la couche d'arrêt d'attaque chimique (2), on passive la face arrière structurée, on attaque complètement la couche d'arrêt d'attaque chimique (2) dans les zones des fenêtres d'attaque (81) et on enlève les couches de passivation (701, 712) de la face avant et de la face arrière.

27. Procédé selon la revendication 26, caractérisé en ce que pour passiver la face arrière non structurée, dans une seconde étape de procédé, on utilise une couche d'oxyde avec sur celle-ci une couche de nitrure, et en ce qu'après structuration de la face arrière on enlève la couche de nitrure.

28. Procédé de fabrication d'un détecteur de vitesse de rotation selon la revendication 1, caractérisé en ce que, dans une première étape de procédé, on passive les deux surfaces principales de la plaquette de silicium (10), on structure les couches de passivation (70a, 70b) pour former des fenêtres d'attaque chimique (80a, 80b) dans ces zones, dans lesquelles on réalise les oscillateurs (21, 22) et les entretoises (41-44), on réduit l'épaisseur des autres couches (2a, 2b) par attaque chimique dans ces zones puis on enlève les couches de passivation (70a, 70b) et, dans une seconde étape, on passive les surfaces structurées pour structurer les couches de passivation (701a, 701b) de manière à former des fenêtres d'attaque chimique (81a, 81b) dans les zones dans lesquelles la plaquette (10) est complètement attaquée, et en ce qu'on attaque complètement les autres couches (2a, 2b) dans les zones des fenêtres d'attaque chimique ((81a, 81b) puis on élimine par attaque chimique le substrat (3) dans les zones des entretoises (41-48) des ouvertures dans les deux autres couches (2a, 2b) pour former des attaques en contre-dépouille (46) qui traversent complètement le substrat (3) et, pour les attaques en contre-dépouille des entretoises (41-48), les autres couches (2a, 2b) servent de couches d'arrêt d'attaque chimique, puis on enlève les couches de passivation (701a, 701b).

29. Procédé selon l'une des revendications 26-28, caractérisé en ce qu'on dope en dopant p⁺ les couches d'arrêt d'attaque chimique (2, 2a, 2b).

30. Procédé selon l'une des revendications 26 à 28, caractérisé en ce que, les jonctions de dopage entre le substrat (3) et les couches d'arrêt d'attaque chimique (2, 2a, 2b) sont des jonctions p/n.

31. Procédé selon la revendication 30, caractérisé en ce que pour l'attaque du substrat (3) on passive les couches d'arrêt d'attaque chimique (2, 2a, 2b) en appliquant une tension dans le sens bloquant aux jonctions p/n.

32. Procédé selon la revendication 28, caractérisé en ce qu'avant la première étape de procédé, pour une construction à trois couches de la plaquette de silicium (10), on réalise les deux surfaces d'un substrat à dopage p (3) dans les zones dans lesquelles on réalise les entretoises (41-48) et, dans une zone de jonction, on masque pour au moins un branchement d'arrêt d'attaque chimique (74a, 74b) sur chacune des deux surfaces principales et, dans les deux surfaces principales masquées, on injecte des dopants p⁺ puis on enlève les masques (72a, 72b) et sur les deux surfaces principales on dépose chaque fois une couche épitaxiale n (2a, 2b), on passive les couches épitaxiales n (2a, 2b) au niveau des branchements d'arrêt d'attaque chimique (74a, 74b) puis sur les surfaces on applique chaque fois une couche de verre (73a, 73b) contenant des ions positifs et en ce que, dans une autre étape du procédé, de préférence par chauffage, on injecte le dopage p⁺ des couches p⁺ (2a, 2b) et les ions positifs des couches de verre (73a, 73b) dans les couches épitaxiales n (2a, 2b) pour qu'elles se chevauchent et qu'il ne subsiste de zone n (6a, 6b, 2a, 2b) que dans les zones initialement masquées et en ce qu'on enlève les couches de verre (73a, 73b).

33. Procédé selon la revendication 31 ou 32, caractérisé en ce que les couches de verre (73a, 73b) contiennent des ions de bore.
